# EUROPÄISCHE PATENTSCHRIFT

(11) **EP 4 026 610 B1**
(45) Veröffentlichungstag und Bekanntmachung des Hinweises auf die Patenterteilung: **31.12.2025**
(21) Anmeldenummer: 21208041.0
(22) Anmeldetag: 12.11.2021
(51) Int. Cl.: B01F 33/35, B01F 35/22, F16J 15/06, F16J 13/02, B01F 35/30

(54) **DICHTUNGSVORRICHTUNG**
SEALING DEVICE
DISPOSITIF D'ÉTANCHÉITÉ

(30) Priorität: 12.11.2020 DE 102020129866
(43) Veröffentlichungstag der Anmeldung: 13.07.2022
(73) Patentinhaber: Zeppelin Systems GmbH, 88045 Friedrichshafen (DE)
(72) Erfinder: KREIS, Henning, 34292 Ahnatal (DE); RICHTER, Ralph, 34225 Baunatal (DE)
(74) Vertreter: Riebling, Peter

(56) Entgegenhaltungen:
- AT-B1- 511 653
- CN-A- 110 420 581
- DE-U1- 202013 103 591
- US-A1- 2011 167 607
- US-A1- 2019 255 493

## Beschreibung

Die Erfindung betrifft eine Dichtungsvorrichtung für eine verfahrenstechnische Anlage entsprechend den Patentansprüchen 1 und 6, einem Mischer mit einer Dichtungsvorrichtung entsprechend dem Patentanspruch sowie ein Verfahren zum Mischen von pulver-, grieß- und/oder granulatförmigen Stoffen entsprechend den Patentansprüchen 14 und 15.

Dichtungen werden bei verfahrenstechnischen Anlagen eingesetzt, bei welchen eine Umwandlung von Stoffsystemen durch überwiegend mechanische Einwirkungen stattfindet. Die verfahrenstechnischen Anlagen umfassen das Zerkleinern, das Agglomerieren, das Trennen und Sieben, das Mischen, sowie das Lagern und Fördern von Stoffen.

Ein Beispiel für eine verfahrenstechnische Anlage ist ein Mischer, welcher zum Verarbeiten von pulver- grieß- und/oder granulatförmigen Stoffen eingesetzt wird, wobei ggf. geringe Mengen Flüssigkeiten vor oder während des Mischens dazugegeben werden. Ein häufiges Prinzip ist hierbei das Freifallmischen, bei welchem ein Mischen in einem Behälter stattfindet, wobei der Mischbehälter während des Mischvorgangs schräg bzw. um 180° (Überkopf) gedreht wird. Für einen solchen Mischvorgang werden beispielsweise Fassmischer, Labormischer, Klein-Chargenmischer, Behältermischer oder Containermischer eingesetzt.

Ein Containermischer besteht in der Regel aus einem Mischerkopf mit einem Mischwerkzeug. Der Mischerkopf wird auf einen mit Mischgut gefüllten Mischbehälter (Mischcontainer) aufgesetzt und verschlossen. Im Anschluss daran wird der gesamte Mischerkopf zusammen mit dem gekoppelten Mischbehälter um eine horizontale Achse gedreht. Danach wird der Mischprozess gestartet, wobei sich das Mischwerkzeug um eine vertikale Achse dreht und eine gute Durchmischung bzw. Homogenisierung des Mischgutes in kürzester Zeit erreicht wird.

Ein Containermischer ist beispielsweise bereits aus der DE 197 08 075 C1 bekannt. Der Mischer besteht aus einem Ständer, sowie zwei verbindbaren Behälterteilen, die innerhalb des Ständers um eine horizontale Achse drehbeweglich gelagert sind. Die Verbindung der Behälterteile erfolgt durch Spannmittel.

Mit der DE 20 2019 105 119 U1 wird eine Mischmaschine für unterschiedliche Mischcontainer offenbart. Bei der Mischmaschine ist der mischerkopfseitige Anschlussflansch als Ringscheibe ausgeführt, so dass an dessen Anlagefläche zumindest zwei unterschiedliche Mischcontainer angeschlossen werden können.

Die DE 20 2017 102 472 U1 offenbart einen Reinigungscontainer zum Reinigen des Mischerkopfes. Sowohl der Mischerkopf, als auch der Mischcontainer weisen jeweils einen Flansch auf, wobei dazwischen eine Dichtung angeordnet ist. Die beiden Flansche werden mit bekannten Mitteln, wie beispielsweise mittels eines Kolben-Zylinder-Aktors zusammengehalten.

Auch die EP 3 342 480 A1 des gleichen Anmelders offenbart bereits einen Mischer mit einem Mischwerkzeug, welcher verschiedene Stoffe in einem Mischbehälter mischt. Auf die Offenbarung dieser Patentanmeldung wird Bezug genommen.

Die US 2019/0255493 A1 offenbart eine Mischmaschine für einen Mischcontainer. Der Mischerkopf ist schwenkbar gegenüber dem Gestell des Mischers ausgebildet, wobei der Mischerkopf eine Kopfplatte mit einem Anschlussflansch und eine ebene Anschlussfläche aufweist. In der Anlagefläche des Anschlussflansches sind zwei Ringdichtungen mit unterschiedlichen Durchmessern angeordnet, so dass am Mischerkopf verschiedene Mischcontainer mit unterschiedlichen Anschlussdurchmessern anschließbar sind.

Die US 2011/0167607 A1 offenbart eine Vorrichtung und ein Verfahren zum Einsetzen einer Dichtung zwischen den verschraubten Verbindungsflanschen von benachbarten Unterwasserrohrleitungssegmenten. Die Vorrichtung mit der Dichtung wird von einem Taucher oder einem ferngesteuerten Unterwasserfahrzeug an eine Unterwasserstelle gebracht und zwischen benachbarte Flansche einer Flanschverbindung eingesetzt.

Mit der CN 110420581 A wird eine Vorrichtung zum Mischen von Chemikalien offenbart. Der Mischvorgang findet in zwei übereinander angeordneten, zylindrischen Behälter statt, welche Bestandteile der Vorrichtung sind und fest mit dieser verbunden sind. Die Vorrichtung umfasst einen Hebemechanismus, um die zwei übereinander angeordneten Behälter zu beabstanden. Darüber hinaus weist die Vorrichtung einen Dichtungsmechanismus auf, mit welcher eine Dichtung zwischen den beiden zylindrischen Behältern positioniert wird. Die Dichtung dichtet zwischen den beiden Stirnflächen der Behälter ab und befindet sich stets auf der gleichen vertikalen Höhe.

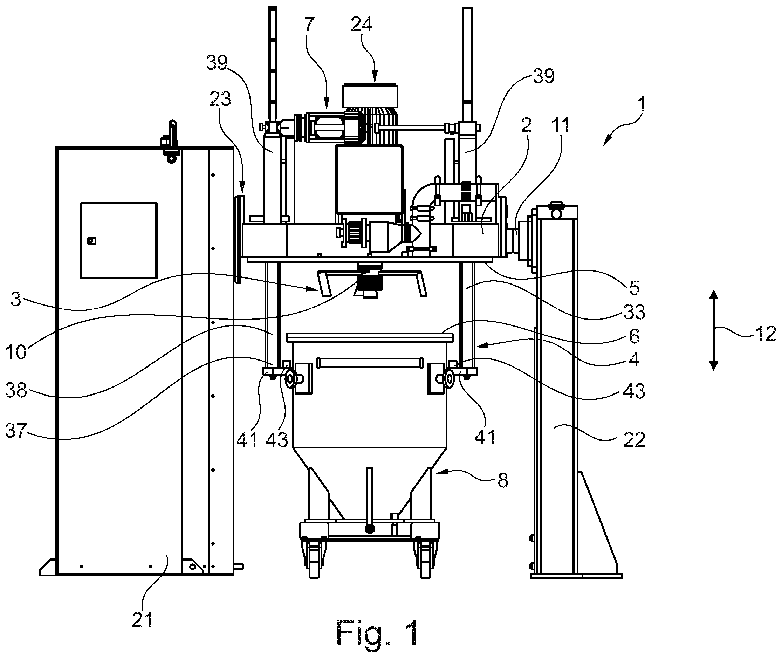

Die AT 511 653 B1 offenbart eine Vorrichtung zum Anheben und Fixieren eines Verschlusselementes (z.B. einem Deckel) einer Prozesskammer in einer Endposition. Gemäß der Figur 1 weist der Deckel eine umlaufende Dichtung auf, wobei durch das nach oben bewegen des Deckels die Prozesskammer nach außen hin abgedichtet wird. Die Vorrichtung besteht aus einem feststehenden Basiselement, wobei ein Auflageelement gegenüber dem Basiselement linear, vorzugsweise in vertikaler Richtung bewegbar ist.

Mit der DE 2013 103591 U1 wird ein Inliner zum Auskleiden eines Mischcontainers offenbart, welcher für den Vorgang des Mischens an eine industrielle Mischmaschine anschließbar ist.

Bei den bekannten Mischern ist stets eine Dichtung zwischen dem Mischerkopf und dem Mischbehälter notwendig. Die Dichtung dient zur Abdichtung des stationären Mischers gegenüber dem auswechselbaren Behälter, wobei sich die Dichtung entweder auf der Seite des Mischerkopfes oder auf der Seite des Mischbehälters befindet.

Mit einem Mischer werden oftmals Mischbehälter mit unterschiedlichen Durchmessern verarbeitet. Die am Mischerkopf befindliche Dichtung muss dann an den neuen Durchmesser des Mischbehälters angepasst werden. Teilweise befindet sich die Dichtung auch am Mischbehälter und wird für die folgende Verarbeitung zusammen mit dem Mischbehälter mitgenommen. Für eine Reinigung muss die Dichtung vom Mischerkopf oder vom Mischbehälter vollkommen entfernt werden.

Beim Stand der Technik, zum Beispiel in der oben genannten US2019/0255493 A1, wurde bisher die Dichtung entweder auf den Stützrand des Mischbehälters oder mit dem Mischerkopf form- oder kraftschlüssig verbunden, damit die Dichtung nicht herausfällt. Eine solche Dichtung ist elastisch ausgebildet, so dass diese ohne Stützfläche aufgrund des großen Durchmessers und der Elastizität durchgehangen ist.

Aufgabe der vorliegenden Erfindung ist es daher, eine Dichtungsvorrichtung bereit zu stellen, welche leicht und gezielt zwischen einem Oberteil und einem Unterteil einer verfahrenstechnischen Anlage angeordnet werden kann.

Zur Lösung der gestellten Aufgabe ist die Erfindung durch die technische Lehre der Ansprüche 1, 6, 12, 14 und 15 gekennzeichnet.

Wesentliches Merkmal der Erfindung ist, dass die Dichtungsvorrichtung aus einer selbsttragenden Dichtung und einer Hubvorrichtung besteht, und dass die Hubvorrichtung die Dichtung zwischen dem Ober- und Unterteil positioniert.

Bei der erfindungsgemäßen Ausführungsform besteht nun der Vorteil, dass eine Dichtungsvorrichtung eingesetzt wird, welche keine feste Zuordnung zu dem Oberteil oder dem Unterteil aufweist. Bei der Dichtungsvorrichtung handelt es sich somit um eine selbstständige Einheit, welche für die Anordnung und Positionierung der Dichtung zwischen dem Oberteil und dem Unterteil verwendet wird.

Unter dem Begriff Positionierung wird die radiale und axiale Ausrichtung der Dichtung gegenüber dem Ober- und Unterteil verstanden. Dies kann beispielsweise ein Halten der Dichtung in einer bestimmten Position, oder eine vertikale Bewegung der Dichtung in Richtung des Oberteils oder Unterteils, aber auch eine radiale bzw. horizontale Bewegung der Dichtung gegenüber dem Ober- oder Unterteil sein.

Bei dem Oberteil der verfahrenstechnischen Anlage kann es sich beispielsweise um einen Mischerkopf, eine Pumpe, ein Sieb oder dergleichen handeln. Bei dem Unterteil der verfahrenstechnischen Anlage kann es sich beispielsweise um einen Mischbehälter, eine Förderleitung oder dergleichen handeln. Um die Beschreibung der erfindungsgemäßen Dichtungsvorrichtung zu vereinfachen, wurde als Oberteil der verfahrenstechnischen Anlage ein Mischerkopf und als Unterteil der verfahrenstechnischen Anlage ein Mischbehälter gewählt.

Der angedockte Mischbehälter bildet die Mischkammer. Vorzugsweise ist der Mischbehälter transportabel ausgebildet. Der Mischbehälter steht beispielsweise auf eigenen Rädern oder ist auf einem Schienensystem fahrbar. Es ist auch möglich, dass der Mischbehälter von einem automatisierten Flurförderfahrzeug (z.B. Roboter) transportiert wird. Ferner weist der Mischbehälter Aufnahmen für die Gabeln eines Hubstaplers auf.

Die Seitenwand des Mischbehälters ist vorzugsweise zylindrisch ausgebildet. Des Weiteren weist der Mischbehälter einen konisch zulaufenden Boden auf. Die Behälterform kann jedoch auch anders ausgebildet sein. Beispielsweise kann der Behälter einen Flachboden oder Klöpperboden aufweisen. Ebenso ist es möglich, dass die Seitenwände aus einem elastischen Material bestehen.

Die Dichtungsvorrichtung ist im Dichtungsbereich zwischen dem Mischerkopf und dem auswechselbaren Mischbehälter angeordnet und dichtet die Stirnfläche des Mischbehälters gegenüber der Abdeckung des Mischerkopfes ab, ohne mit einem der beiden Bauteile fest verbunden, z.B. montiert oder geklebt zu sein. Mit der erfindungsgemäßen Dichtungsvorrichtung ist damit eine unabhängige Anordnung einer bzw. mehrerer Dichtungen zwischen einem Ober- und einem Unterteil möglich.

Die Dichtung ist erfindungsgemäss selbsttragend.

Bei einer ersten bevorzugten Ausführungsform weist die Dichtungsvorrichtung eine Dichtung auf, welche selbsttragend und eigenständig ausgebildet ist. Unter einer selbsttragenden Dichtung wird eine Dichtung verstanden, welche ohne Hilfsmittel, d.h. freitragend bzw. ungestützt ist. Dadurch ist es möglich, dass die Dichtung von der Dichtungsvorrichtung ausschließlich an den Randbereichen gehalten wird. Eine solche selbsttragende Dichtung kann beispielsweise aus Polytetrafluorethylen (PTFE) bestehen. Dieser Werkstoff bietet neben seinen hervorragenden Dichtungseigenschaften den Vorteil, eine sehr hohe Eigenstabilität aufzuweisen, die eine zusätzliche, mechanische Unterstützung, um eine ausreichende Stabilität zu gewährleisten, entbehrlich macht.

Vorzugsweise besteht die Dichtung aus einem elastischen Dichtring und einem Verstärkungsring, welche einteilig ausgebildet sind. Der Verstärkungsring kann auch als Einlage ausgebildet sein. Entscheidend ist, dass durch den Verstärkungsring der elastische Dichtring der Dichtung händelbar ist. Damit kann die Dichtung leicht als separate Einheit zwischen dem Mischerkopf und dem Mischbehälter angeordnet werden.

Der Verstärkungsring besteht aus einem stabilen Material, wie z.B. Kunststoff, Elastomer, Faserverbund-Werkstoff, Stahl, Aluminium, Blech oder dergleichen. Vorzugsweise erstreckt sich der Verstärkungsring über den gesamten Umfang der Dichtung. Es ist aber auch möglich, dass sich der Verstärkungsring nur über bestimmte Teilbereiche der Dichtung erstreckt.

Unter einer Dichtung wird ein Element verstanden, welches ungewollte Stoffübergänge von einem Ort zu einem anderen verhindert oder begrenzt. Bei dem Dichtring handelt es sich vorzugsweise um eine statische Dichtung, welche beispielsweise als Flachdichtung, Profildichtung, Delta-Ring, O-Ring, Faserdichtung, Kompriband oder als aufblasbare Dichtung ausgebildet ist.

Bei einer bevorzugten Ausführungsform weist die Dichtung einen u-förmigen Querschnitt auf, in welchen mindestens ein Verstärkungsring eingelegt ist. Der Verstärkungsring ist somit an mindestens drei Seiten von der Dichtung umgeben und verleiht der Dichtung die notwendige Stabilität.

Es ist auch möglich, dass wenigstens eine der Ringflächen des Verstärkungsringes eine konzentrisch verlaufende Nut zur Aufnahme einer als O-Ring ausgebildeten Dichtung aufweist.

Bei einer weiteren bevorzugten Ausführungsform ist die Dichtungsvorrichtung dreiteilig ausgebildet, wobei auf der Ober- und auf der Unterseite des Verstärkungsrings jeweils ein Dichtring angeordnet ist. Der obere und/oder untere Dichtring kann mehrteilig ausgeführt sein. Dies bedeutet, dass sich z.B. im Randbereich der Dichtung ein anderer Dichtring (Außenring) als im Inneren der Dichtung (Innenring) befindet. Der Verstärkungsring dient somit als Basis für die Dichtung und bildet eine Einheit mit den Dichtringen aus. Durch den Verstärkungsring erhalten die beiden elastomeren Dichtringe eine Stabilität, so dass die gesamte Dichtungsanordnung leicht zu handhaben ist.

Vorzugsweise ist der Umfang des Verstärkungsrings größer als der Umfang der Dichtringe, so dass der Verstärkungsring radial über die Dichtringe hinaussteht. Dadurch ist es möglich, die Dichtungsvorrichtung ausschließlich am Verstärkungsring zu greifen, ohne dass die Dichtringe beschädigt werden.

Es ist ferner auch möglich, dass ein radialer Außenabschnitt der Dichtung als Teil des Verstärkungsringes ausgebildet ist. Dies bedeutet, dass am Außenumfang der Dichtung der Verstärkungsring angeordnet ist, welcher die innenliegende, elastische Dichtung stabilisiert.

Bei einer bevorzugten Ausführungsform ist die Dichtung im Querschnitt zweigeteilt ausgebildet. Die Zweiteilung erfolgt beispielsweise in zwei Halbkreise, welche jeweils einen Verstärkungsring aufweisen. Selbstverständlich ist es auch möglich, eine Dichtung einzusetzen, welche mehrteilig ausgebildet ist. Dies können beispielsweise zwei Dichtungen sein, welche sich über die Teilbereiche von 270° und 90° erstrecken.

Die Dichtungsvorrichtung ist entweder als separate Einheit, d.h. losgelöst von dem Mischer und dem Mischbehälter ausgebildet. Oder die Dichtungsvorrichtung ist mindestens einem Bauteil, beispielsweise dem Mischer, Mischerkopf oder Mischbehälter zugeordnet. Es ist ferner auch möglich, dass die Dichtungsvorrichtung an einem (separaten) Gestell angeordnet ist. Durch das Gestell kann die Dichtung an jedem beliebigen Ort innerhalb der Produktion z.B. auf den frisch gereinigten Mischbehälter aufgelegt werden. Bei der erfindungsgemäßen Dichtungsvorrichtung handelt es sich somit um eine separate Vorrichtung, mit deren Hubvorrichtung eine Dichtung auf ein Bauteil aufgelegt oder abgenommen werden kann.

Durch die eigenständige Dichtungsvorrichtung wird die Dichtung auf einer bestimmten vertikalen Position unterhalb des Mischerkopfes gehalten, wenn z.B. der Mischbehälter gewechselt wird. Es handelt sich dann um eine "fliegende Dichtung", da diese unter der Mischplatte bzw. dem Mischerkopf schwebt. Wesentlicher Vorteil der fliegenden Dichtung ist, dass der Mischbehälter leicht unter dem Mischerkopf ein- und ausgefahren werden kann. Dieser Vorgang kann auch als Ein- oder Ausbau bezeichnet werden.

Bei einer bevorzugten Ausführungsform ist die Dichtungsvorrichtung als Dichtungshalterung ausgebildet, welche die Dichtung auf einer bestimmten Position innerhalb des Mischers hält. Die Dichtung ist hierbei zwischen dem Mischerkopf und dem Mischbehälter positioniert, wobei während des vertikalen Andockvorganges des Mischbehälters an dem Mischerkopf die Stirnfläche des Mischbehälters die Dichtung von unten untergreift und mitnimmt. Beim Abdockvorgang wird der Mischbehälter vom Mischerkopf entfernt, wobei die Dichtung wieder auf der Dichtungsvorrichtung abgelegt wird. Bei der Dichtungsvorrichtung handelt es sich somit um eine Dichtungshalterung, wobei die Dichtung entweder von der Dichtungsvorrichtung mitgenommen oder auf der Dichtungsvorrichtung abgesetzt wird.

Bei einer weiteren bevorzugten Ausführungsform ist die Dichtungsvorrichtung schwenkbar am Mischer, am Mischbehälter oder an einem Gestell angeordnet. So wird beispielsweise der Verstärkungsring von der Dichtungsvorrichtung gehalten, welche schwenkbar ausgebildet ist. Dadurch ist es möglich, die Dichtung zwischen den Mischerkopf und den Mischbehälter einzuschwenken und gegenüber den gewünschten Kontaktflächen zu positionieren. Zusätzlich hierzu kann die Dichtungsvorrichtung in vertikaler Richtung verschoben werden, um z.B. die Dichtung an mindestens einer Kontaktfläche richtig zu positionieren.

Vorzugsweise ist die Dichtungsvorrichtung an einem Schwenkarm angeordnet, dessen Schwenkachse senkrecht (vertikale Schwenkachse) zur Stirnfläche des Mischbehälters ausgerichtet ist. Es ist jedoch auch möglich, dass der Schwenkarm eine horizontale Schwenkachse aufweist. Mit Hilfe des Schwenkarms wird die Dichtung in den Zwischenraum zwischen den Mischbehälter und dem Mischerkopf eingeschwenkt.

Des Weiteren ist es möglich, dass die Dichtungsvorrichtung an einer Linearführung (Geradführung) angeordnet ist, welche beispielsweise als Schlittenführung, Gleitführung, Kugellagerführung oder Kugellager-Teleskopführung ausgebildet ist.

Ferner kann die Dichtungsvorrichtung an einer Kulissenführung angeordnet sein, mit welcher die Dichtung von außen durch einen vorherbestimmten Bewegungsablauf in den Zwischenraum (Dichtungsbereich) zwischen dem Mischerkopf und dem Mischbehälter eingeführt und wieder aus dem Zwischenraum ausgeführt wird.

Bei einer weiteren bevorzugten Ausführungsform ist die Dichtungshalterung an der Hebevorrichtung angeordnet, mit welcher der Mischbehälter an den Mischerkopf angehoben und abgesenkt wird. Vorzugsweise besteht die Hebevorrichtung aus mindestens einer Hubstange, welche mit einem Antrieb verbunden ist. Der Antrieb kann beispielsweise als Hubzylinder, Seilwinde oder Spindelmotor ausgebildet sein. Am kopfseitigen Ende der Hubstange ist eine Hebeplatte angeordnet, welche an die Seitenwand des Mischbehälters oder an einen radial von der Seitenwand vorstehenden Stützrand des Mischbehälters angreift, um diesen anzuheben oder abzusenken.

Die Bewegungsrichtung der Dichtungsvorrichtung ist parallel zu der Bewegungsrichtung der Hebevorrichtung. Bei einem Anheben des Mischbehälters mit der Hebevorrichtung wird somit gleichzeitig die Dichtungsvorrichtung zusammen mit der Dichtung angehoben.

Bei einer weiteren bevorzugten Ausführungsform weist die Dichtungsvorrichtung mindestens eine Hubvorrichtung mit mindestens einem Haltesteg auf. Vorzugsweise ist der Haltesteg an der Hebeplatte der Hebevorrichtung angeordnet. Der Haltesteg dient als Halterung für die Dichtung und ist mittels Hebestangen in vertikaler Richtung bewegbar. Zur Halterung der Dichtung weist der Haltesteg beispielsweise eine stufenförmige Ausnehmung zur Aufnahme des Außenabschnitts der Dichtung auf. Ebenso ist es möglich, dass der Haltesteg einen Schnellverschluss, z.B. einen Schnappverschluss aufweist, mit welchem die Dichtung gehalten wird.

Die Hubvorrichtung weist vorzugsweise mindestens einen radial einwärts gegen die Dichtung gerichteten Haltesteg auf, welcher vertikal verschiebbar ausgebildet ist, wobei der Haltesteg die Dichtung unterseitig untergreift und gegenüber dem Mischerkopf oder dem Mischbehälter anhebt oder absenkt.

Vorzugsweise bewegt sich die Hebeplatte mit der Hebevorrichtung. Es ist jedoch auch möglich, dass die vertikale Bewegung des Haltestegs durch einen eigenen Antrieb erfolgt.

Die Haltestege können beispielsweise auch eine eigene Führungsvorrichtung aufweisen, mit welcher die Haltestege beim Absenken des Mischbehälters, d.h. weg vom Mischerkopf, auf einer bestimmten vertikalen Position verbleiben, während die Hebeplatten zusammen mit dem Mischbehälter sich weiter in vertikaler Richtung absenken. Die Haltestege können ferner auch einen Mitnehmer aufweisen, so dass bei der vertikalen Bewegung der Hebeplatten die Haltestege mitgenommen werden. Der Haltesteg und die Hebestangen können auch als Art Stößel ausgebildet sein, wobei der Stößelkopf als Betätigungselement ausgebildet ist. Die Dichtung liegt auf dem Haltesteg auf. Durch eine Führung bzw. Bewegung der Hebestange wird die Dichtung in vertikaler Richtung entweder an den Mischerkopf gedrückt oder von der Hebeplatte angehoben. Die Stößel heben somit die Dichtung kurz an, danach wird der Mischbehälter unter den Mischerkopf gefahren, wobei der Rand des Mischbehälters zwischen der Hebeplatte unter der Unterseite der Dichtung eingefahren wird. Danach wird die Dichtung durch ein Absenken des Haltestegs auf den Mischbehälterrand aufgesetzt und der Mischbehälter angehoben.

Vorzugsweise weist der Haltesteg mehrere sich in Richtung der Stirnfläche des Mischbehälters erstreckende Bolzen auf, an denen die Dichtung gehalten ist.

Die erfindungsgemäße Dichtungsvorrichtung ist manuell oder automatisch steuerbar. Es ist beispielsweise möglich, dass die Dichtungsvorrichtung automatisch die Dichtung zwischen den Mischbehälter und dem Mischerkopf einschwenkt, wenn der Mischbehälter richtig unterhalb des Mischerkopfes positioniert wurde. Der Einschwenkvorgang kann ferner mit einem Taster gestartet werden.

Entscheidend ist, dass die erfindungsgemäße Dichtungsvorrichtung nicht auf die Anwendung bei einem Mischer beschränkt ist. Vielmehr ist es möglich, die Dichtungsvorrichtung bei allen mechanischen Verfahrenstechnik-Vorrichtungen einzusetzen, welche ein Ober- und ein Unterteil aufweisen.

In einer erfindungsgemässen Ausführungsform weist die Dichtungsvorrichtung vertikal bewegbare Führungsstangen auf, an deren Enden jeweils mindestens eine Aufnahme zur formschlüssigen und/oder kraftschlüssigen Halterung der Dichtung angeordnet ist. Die Aufnahme für die Dichtung besteht aus einem oberen Anschlag und einen unteren Haltesteg, zwischen welchen die Dichtung gehalten wird. Die Dichtung liegt vorzugsweise auf dem Haltesteg auf. Der Anschlag dient zum leichten Lösen der Dichtung vom Mischerkopf beim Abdocken des Mischbehälters.

Es ist aber auch möglich, dass die Aufnahme lediglich als tellerartiger Haltesteg oder Stößel ausgebildet ist, auf welchem die Dichtung auflegbar ist. Der Haltesteg untergreift dann die Dichtung und hält diese jeweils in der vorbestimmten vertikalen Position unterhalb des Mischerkopfes.

Des Weiteren weist die Dichtungsvorrichtung mindestens eine Drehvorrichtung für die Aufnahmen auf, welche die Aufnahmen zur Dichtung hindreht oder von der Dichtung wegdreht. Durch die Drehbewegung der Aufnahmen in Richtung der Dichtung wird die Dichtung in der Aufnahme aufgenommen und von der Aufnahme gehalten.

Bei einer weiteren bevorzugten Ausführungsform besteht die Aufnahme aus einem Anschlag, welcher mit der Führungsstange verbunden ist. Der beabstandete Haltesteg ist gegenüber dem Anschlag drehbar ausgebildet. Bei einer Drehbewegung des Haltestegs in Richtung der Dichtung, wird die Dichtung von dem Haltesteg untergriffen und von dem Haltesteg gehalten. Bei einer Drehbewegung weg von der Dichtung wird das Haltesteg außer Eingriff von der Dichtung gebracht. Die Führungsstange ist beispielsweise als hohles Rohr ausgebildet, an welchem der Anschlag drehfest angeordnet ist. Innerhalb des Rohres ist drehbar eine Antriebswelle für den Haltesteg angeordnet. Die Antriebswelle ist im Bereich des Mischerkopfes, vorzugsweise auf der Oberseite des Mischerkopfes, mit einem Antrieb verbunden, welcher die Drehbewegung des Haltestegs bewirkt.

Die Dichtungsvorrichtung ist so ausgestaltet, dass beim Andocken des Mischbehälters am Mischerkopf mit der eingelegten Dichtung eine ausreichende Dichtwirkung erreicht wird. Dies wird beispielsweise mit einer Dichtung erreicht, welche nach erfolgtem Andockvorgangs im komprimierten Zustand trotzdem noch höher als der Anschlag der Aufnahme ist. Oder die Dichtung weist mindestens einen eigensteifen Verstärkungsring auf, an dessen Ober- und/oder Unterseite jeweils ein Dichtring angeordnet ist, wobei sich der Verstärkungsring über Umfang des Dichtrings erstreckt, so dass die Aufnahmen seitlich die Dichtung außerhalb des eigentlichen Dichtbereichs halten. Alternativ weist die Dichtung eine radiale Dichtfläche auf, die so groß ist, dass der Anschlag von der Dichtung überdeckt wird.

Sollte die Aufnahme lediglich als tellerartiger Haltesteg ausgebildet sein, so wird der Haltesteg bei der Drehbewegung unter die Dichtung gedreht und untergreift diese oder von der Dichtung weggedreht.

Hinsichtlich der vertikalen Bewegung der Dichtungsvorrichtung, insbesondere der Aufnahmen gibt es verschiedene Möglichkeiten. Entweder wird die vertikal bewegbare Aufnahme mit Hilfe mindestens eines Antriebs auf die jeweilige vertikale Position gefahren.

Oder die Dichtungsvorrichtung weist keinen eigenen vertikalen Antrieb auf. Bei dieser Ausführungsform wird die Aufnahme für die Dichtung in vertikaler Richtung von der Hebevorrichtung für den Mischbehälter mitgenommen. Ein Lösen der Dichtung von dem Mischerkopf erfolgt dann durch das (Eigen-)Gewicht der Dichtungsvorrichtung beim Abdocken des Mischbehälters von dem Mischerkopf. Dies bedeutet, dass durch das Gewicht der Aufnahmen und der Dichtung sich die beiden Bauteile vertikal nach unten bewegen, wenn der Mischbehälter mit der Hebevorrichtung von dem Mischerkopf getrennt wird. Es findet damit eine vertikale Bewegung der Dichtungsvorrichtung, insbesondere der Aufnahmen und Dichtungen, ohne eigenen Antrieb statt. Eine vertikale Verschiebung nach oben erfolgt durch das Mitnehmen mit der Hebevorrichtung für den Mischbehälter. Eine vertikale Verschiebung nach unten erfolgt durch das Gewicht der Dichtungsvorrichtung. Die vertikale Höhe d.h. die vorbestimmte Position kann hierbei durch die Länge der Führungsstangen bestimmt werden.

Bei einer weiteren bevorzugten Ausführungsform weist die Dichtungsvorrichtung eine Abdrückvorrichtung auf, um die Aufnahmen von Mischerkopf abzudrücken bzw. in vertikaler Richtung vom Mischerkopf wegzubewegen. Die Abdrückvorrichtung befindet sich im Bereich der Aufnahme und drückt die Aufnahme während des Abdock-Vorganges des Mischbehälters von dem Mischerkopf ab. Die Abdrückvorrichtung ist beispielsweise ein elastisches Element, eine Feder, ein Dämpfer, ein Zylinder oder ein linearer Antrieb.

Durch die Drehbewegung wird die Aufnahme mit der Dichtung verbunden. Die Bewegungen bzw. Steuerung der Aufnahmen können somit entweder manuell von Hand oder mit Antrieben erfolgen.

Es ist auch möglich, dass die Position der Dichtung mit Hilfe von Sensoren erfasst wird und die Aufnahme(n) mit automatisierten Antrieben zu der gewünschten Position bewegt werden. Die Sensoren erfassen hierbei die vertikale und radiale Ausrichtung der Dichtung unterhalb des Mischkopfes. Des Weiteren weisen vorzugsweise die Antriebe für die Aufnahmen ebenfalls Sensoren auf, mit welcher die aktuelle Position und Ausrichtung der jeweiligen Aufnahme erfasst wird.

Des Weiteren ist es möglich, dass die Dichtung Anschläge aufweist, mit welchen die Dichtung formschlüssig auf dem Rand des Mischbehälters positioniert wird. Die Dichtung kann ferner Markierungen oder Tags (RFID) aufweisen, welche von Sensoren erfasst werden. Die Sensoren erfassen, ob eine Dichtung vorhanden ist und bestimmen die aktuelle Position der Dichtung.

Vorzugsweise ist die Dichtungsvorrichtung am Mischerkopf des Mischers angeordnet und bildet mit diesem eine Einheit aus. Die Führungsstangen für die Aufnahmen erstrecken sich ausgehend von der Unterseite des Mischers durch den Mischerkopf und enden mit deren Kopfteilen auf der Oberseite des Mischerkopfs. Dadurch ist es möglich, dass die Aufnahmen für die Dichtung von außen, d.h. außerhalb des Dichtungsbereiches gesteuert werden können.

Bei einer bevorzugten Ausführungsform findet folgendes Verfahren mit der Dichtungsvorrichtung statt:
- Auflegen der Dichtung auf dem Mischbehälter entweder mit der Dichtungsvorrichtung oder von Hand durch einen Bediener;
- Andocken des Mischbehälters an dem Mischerkopf, wobei die Dichtung in vertikaler Richtung im Dichtbereich zwischen dem Mischerkopf und dem Mischbehälter geklemmt wird;
- Durchführung des Mischvorgangs;
- Abdocken des Mischbehälter vom Mischerkopf, wobei die Dichtung von der Dichtungsvorrichtung unterhalb des Mischerkopfes in einer vertikalen Position (="fliegende" Position) gehalten wird.

Optional weisen die Aufnahmen für die Dichtung mindestens eine Feder auf, welche während dem Andocken des Mischbehälters am Mischerkopf komprimiert und beim Abdocken dekomprimiert werden. Beim Abdocken des Mischbehälters vom Mischerkopf werden somit die Aufnahmen vom Mischerkopf abgedrückt, wodurch die Dichtung vom Mischerkopf gelöst wird.

Nach dem Mischvorgang wird die Dichtung entweder von der Dichtungsvorrichtung gehalten oder kann von dem Mischbehälter bzw. der Dichtungsvorrichtung entfernt werden.

Ein weiteres bevorzugtes Verfahren weist die folgenden Verfahrensschritte auf:
- Positionieren der Dichtung auf einem ersten Mischbehälter; Unter dem Begriff "Positionieren" wird ein Auflegen der Dichtung auf dem Mischbehälter entweder mit der Dichtungsvorrichtung oder von Hand durch einen Bediener verstanden;
- Positionieren des Mischbehälters unter dem Mischer; Auch hier kann der Mischbehälter entweder mit einer angetriebenen Vorrichtung oder von Hand unter dem Mischer positioniert werden.
- Andocken des Mischbehälters am Mischerkopf des Mischers, wobei die Dichtungsvorrichtung in vertikaler Richtung mitgenommen wird;
- Durchführung des Mischvorgangs;
- Abdocken des Mischbehälters vom Mischerkopf;
- Abdrücken der Aufnahmen für die Dichtung vom Mischerkopf;
- Halten der Dichtung mit der Dichtungsvorrichtung unterhalb des Mischerkopfes in einer vorbestimmten, vertikalen Position (=fliegende Position);
- Entnahme des Mischbehälters;
- Positionierung eines zweiten Mischbehälters (ohne Dichtung);
- Andocken des zweiten Mischbehälters, wobei die gehaltene Dichtung in vertikaler Richtung mitgenommen wird.

Mit der erfindungsgemäßen Dichtungsvorrichtung besteht der Vorteil, dass die Dichtung in einer bestimmten Position gehalten wird und werkzeuglos austauschbar ist. Die Dichtung ist hierbei nicht fest mit einem Maschinenständer verbunden, sondern wird von der Dichtungsvorrichtung mechanisch gehalten. Die Dichtung kann dadurch schnell für jede Mischung getauscht werden. Durch die vertikale Bewegbarkeit der Dichtung durch die Dichtungsvorrichtung wird ein gleichmäßiges Abdichten erreicht. Mit der Dichtungsvorrichtung ist es jederzeit möglich, dass die bereits benutzte Dichtung nach dem Abdockvorgang des Mischbehälters auf dem Rand des Mischbehälters verbleibt und mit dem Mischbehälter von dem Mischer entfernt wird. Hierfür müssen die Aufnahmen nur von der Dichtung weggedreht werden, so dass die Aufnahmen außer Eingriff von der Dichtung sind.

Der Erfindungsgegenstand der vorliegenden Erfindung ergibt sich aus dem Gegenstand der einzelnen Patentansprüche.

Im Folgenden wird die Erfindung anhand von mehreren darstellenden Zeichnungen näher erläutert. Hierbei gehen aus den Zeichnungen und ihrer Beschreibung weitere Vorteile der Erfindung hervor.

Es zeigen:
- Figur 1:: schematische Darstellung eines Mischers
- Figur 2:: Mischer mit angehobenem Mischbehälter
- Figur 3:: Darstellung Mischbehälter unter dem Mischerkopf und der erfindungsgemäßen Dichtungsvorrichtung
- Figur 4:: Dichtungsvorrichtung mit ausgefahrenen Haltestegen
- Figur 5:: Seitenansicht des Mischers mit Dichtungsvorrichtung und ausgefahrenen Haltestegen
- Figur 6:: schematische Darstellung der Dichtungsvorrichtung mit ausgefahrenen Haltestegen
- Figur 7:: Seitenansicht des Mischers mit aufgelegter Dichtung
- Figur 8:: Seitenansicht der Dichtungsvorrichtung mit eingefahrenen Haltestegen
- Figur 9:: perspektivische Darstellung der Dichtungsvorrichtung
- Figur 10:: Seitenansicht der Dichtungsvorrichtung mit aufgelegter Dichtung
- Figur 11:: perspektivische Darstellung der Dichtungsvorrichtung mit Feder
- Figur 12:: Detailansicht der Dichtungsvorrichtung mit Feder
- Figur 13:: Detailansicht der Dichtungsvorrichtung mit komprimierter Feder
- Figur 14:: Mischer mit schwenkbarer Dichtungsvorrichtung
- Figur 15:: Mischer mit schwenkbarer Dichtungsvorrichtung mit geteilter Dichtung
- Figur 16:: Dichtungsvorrichtung an einem Gestell
- Figur 17:: Seitenansicht der Dichtungsvorrichtung an einem Gestell
- Figur 18:: Dichtungsvorrichtung mit Dichtungshalterung und angehobener Dichtung
- Figur 19:: perspektivische Darstellung der Dichtungsvorrichtung mit aktiver Dichtungshalterung
- Figur 20:: Seitenansicht des Mischers mit der Dichtungsvorrichtung mit aktiver Dichtungshalterung
- Figur 21:: Seitenansicht des Mischers mit der Dichtungsvorrichtung mit passiver Dichtungshalterung
- Figur 22:: perspektivische Darstellung der Dichtungsvorrichtung mit passiver Dichtungshalterung
- Figur 23:: Seitenansicht des Mischers mit Mischcontainer und abgelegter Dichtung
- Figur 24:: Vorderansicht des Mischers mit Mischcontainer und abgelegter Dichtung
- Figur 25:: Draufsicht auf den Mischer bei abgelegter Dichtung
- Figur 26:: perspektivische Darstellung des Mischers mit abgelegter Dichtung
- Figur 27:: perspektivische Darstellung auf den Mischer bei abgelegter Dichtung
- Figur 28:: Seitenansicht des Mischers mit Mischcontainer und fliegender Dichtung
- Figur 29:: Vorderansicht des Mischers mit Mischcontainer und fliegender Dichtung
- Figur 30:: Draufsicht auf den Mischer bei aufgenommener Dichtung
- Figur 31:: perspektivische Darstellung des Mischers mit aufgenommener Dichtung
- Figur 32:: perspektivische Darstellung auf den Mischer mit aufgenommener Dichtung

Mit der Figur 1 wird ein Mischer 1 gezeigt, welcher als Containermischer ausgebildet ist. Der Mischer 1 weist im Wesentlichen einen Ständer 22 auf, an welchem drehbar ein Mischerkopf 2 mit einem Mischwerkzeug 3 angeordnet ist. Unterhalb des Mischerkopfes 2 ist ein mobil ausgebildeter Mischbehälter 8. An dem Ständer 22 befindet sich eine Schwenkanordnung zur Verschwenkung des Mischerkopfes 2 und des Mischbehälters 8 um eine horizontale Drehachse 11 mithilfe eines Schwenkantriebs 23.

Der Mischbehälter 8 wird mit dem Mischerkopf 2 gekoppelt und ausgehend von der gezeigten Befüllungsstellung mithilfe des Schwenkantriebs um 180° gedreht, so dass sich der Mischerkopf 2 unterhalb des Mischbehälters 8 befindet. Dies entspricht der Arbeitsstellung des Mischers 1.

Am Mischerkopf 2 ist ein Mischwerkzeug 3 angeordnet, das über einen Mischerantrieb 24 angetrieben wird. Auf einer Antriebsachse 10 ist über eine Nabe das Mischwerkzeug 3 drehfest befestigt. Das Mischwerkzeug 3 weist drei radial vorstehende Flügel auf.

Die Antriebsachse 10 greift durch eine Ausnehmung einer Abdeckung 5 des Mischerkopfes 2 durch. Mithilfe der Abdeckung 5 wird der Mischbehälter 8 während des Mischvorgangs verschlossen. Zwischen der Abdeckung 5 und der radialen Stirnfläche des Mischbehälters 8 befindet sich eine Dichtung 6. Die Dichtung 6 wird mit einer eigenen Dichtungsvorrichtung 40 gehalten, welche als Dichtungshalterung 4 dient.

Der Mischer 1 weist einen Schaltschrank 21 auf, in welchem die Steuerung für den Mischer 1, die Hebevorrichtung 37 und die Dichtungshalterung 4 angeordnet ist. Bei einer weiteren Ausführungsform ist der Schaltschrank beabstandet von dem Mischer 1 angeordnet. Gemäß der Figur 1 befindet sich der Mischbehälter 8 in der Befüllungsstellung.

Die Hebevorrichtung 37 dient zum Anheben und Absenken des Mischbehälters 8 und besteht im Wesentlichen aus dem Antrieb 7, den Hubzylindern 39, den Hubstangen 38 und den Hebeplatten 41. Die Hubzylinder 39 sind vorzugsweise oberhalb des Mischerkopfes 2 angeordnet und sind mit den Hubstangen 38 verbunden, die sich ausgehend von dem Mischerkopf 2 vertikal in Richtung des Mischbehälters 8 erstrecken. Am kopfseitigen Ende der Hubstangen 38 ist jeweils eine Hebeplatte 41 angeordnet, welche zur Kopplung mit dem Mischbehälter 8 ausgebildet ist. Mithilfe der Hubzylinder 39 kann nun der Mischbehälter 8 in Pfeilrichtung 12 angehoben und abgesenkt werden.

Im Bereich der Hebeplatten 41 befindet sich die Dichtungsvorrichtung 40. Die Dichtungsvorrichtung 40 besteht gemäß der Figur 1 aus einem Haltesteg 43, welcher die Dichtung 6 während des Wechsels des Mischbehälters 8 hält. Die Dichtungsvorrichtung 40 positioniert somit die Dichtung 6 zwischen der Abdeckung 5 des Mischerkopfes 2 und der Stirnfläche 33 des Mischbehälters 8.

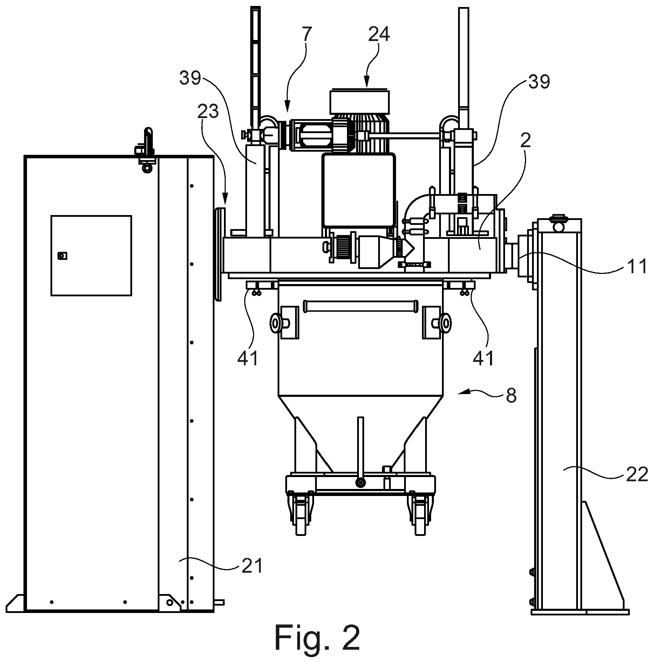

Mit der Figur 2 wird der Mischer 1 mit angehobenem Mischbehälter 8 gezeigt. Der Mischbehälter 8 wurde mit der Hebevorrichtung 37 in vertikaler Richtung (Pfeilrichtung 12) angehoben. Zwischen der Stirnfläche 33 des Mischbehälters 8 und der Abdeckung 5 befindet sich die Dichtung 6.

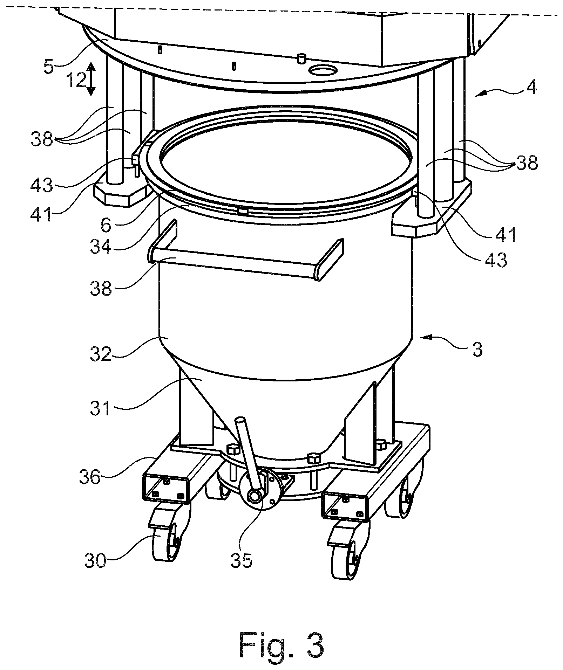

Figur 3 zeigt die Hebevorrichtung 37 mit den Hubstangen 38 und den Hebeplatten 41. Die Hebeplatten 41 greifen unter den Stützrand 34 des Mischbehälters 8 und heben diesen an. An den Hebeplatten 41 ist jeweils ein Haltesteg 43 angeordnet, welcher die Dichtung 6 hält und richtig gegenüber dem Stützrand 34 des Mischbehälters 8 und der Abdeckung 5 des Mischerkopfes 5 positioniert.

Der Mischbehälter 8 weist eine zylindrische Seitenwand 32 auf, wobei der Boden 31 konisch ausgebildet ist. Im Bereich des Bodens 31 befindet sich ein Auslass 35, welcher mit einem Absperrventil verschlossen ist. Der Mischbehälter 8 steht auf Rädern 30 und kann dadurch unter den Mischerkopf 2 gefahren werden. Zusätzlich weist der Mischbehälter 8 zwei Aufnahmen 36 für die Zinken eines Hubstaplers auf.

An der Seitenwand 32 weist der Mischbehälter 8 ferner einen Griff 29 auf, mit welcher der Behälter leichter innerhalb der Produktion verschoben werden kann.

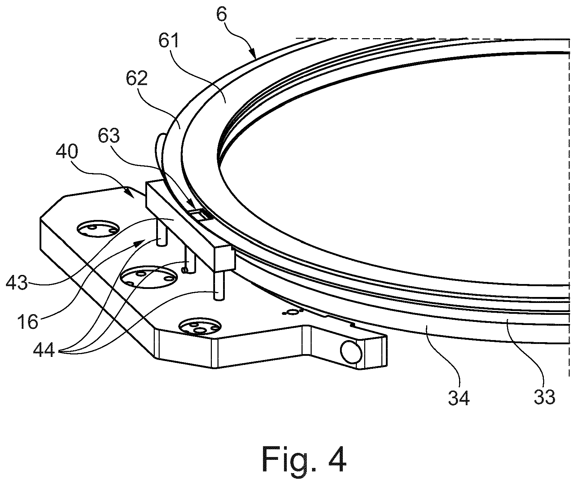

Mit der Figur 4 wird die erfindungsgemäße Dichtungsvorrichtung 40 mit der Hubvorrichtung 16 gezeigt. Die Hubvorrichtung 16 der Dichtungsvorrichtung 40 besteht aus dem Haltesteg 43 und den vertikal verschiebbaren Hebestangen 44. Die Bewegung der Hebestangen 44 erfolgt entweder in Kombination mit der Bewegung der Hubstangen 38 oder die Bewegung der Hebestangen 44 erfolgt durch einen eigenen Antrieb.

Der Haltesteg 43 greift unter den Verstärkungsring 62 der Dichtung 6. Oberhalb und Unterhalb des Verstärkungsrings 62 befindet sich jeweils ein Dichtring 61, dessen radialer Umfang kleiner ist als der Umfang des Verstärkungsrings 62. Der Verstärkungsring 62 steht über dem Dichtring 61 und kann somit von dem Haltesteg 43 erfasst und gehalten werden. Der Verstärkungsring 62 weist am Außenumfang eine Ausnehmung auf, welche mit einer lösbaren Halterung 63 des Haltestegs 43 zusammenwirkt. Die Halterung 63 kann entweder von Hand oder maschinell geöffnet und geschlossen werden. Mit Hilfe der Halterung 63 wird ein Verrutschen der Dichtung 6 auf dem Haltesteg 43 verhindert.

Die Hebeplatte 41 befindet sich unter dem Stützrand 34 des Mischbehälters 8, welcher in diesem Bereich radial erweitert ist. Oberhalb des Stützrandes 34 ist die Stirnfläche 33, auf welcher die Dichtung 6 aufliegt. Anhand der Figur 4 ist zu erkennen, dass die vertikale Position der Dichtung 6 durch die Dichtungsvorrichtung 40 gegenüber der Hebeplatte 41 steuerbar ist. Dies bedeutet, dass die Dichtung 6 mit der Dichtungsvorrichtung 40 gehalten wird und auf die Stirnfläche 33 des Mischbehälters 8 auflegbar ist.

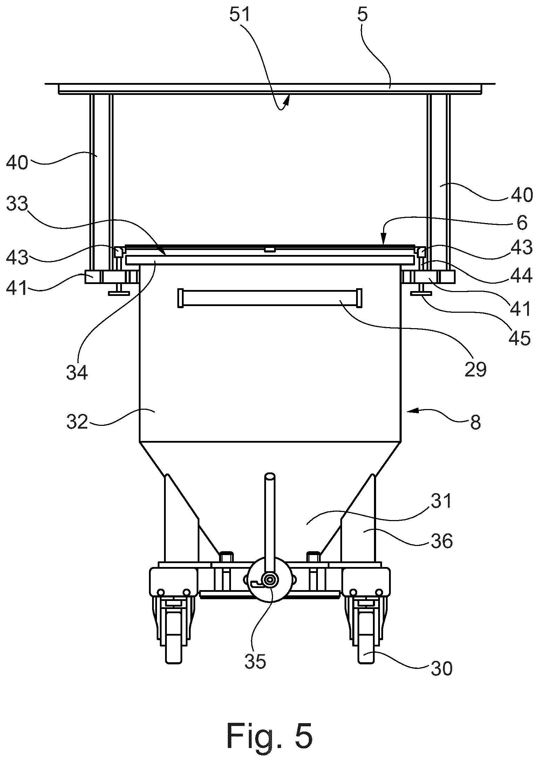

Figur 5 zeigt den Mischer 1 mit einem Mischbehälter 8, wobei die Dichtung 6 von dem Stützrand 34 mit Hilfe der Dichtungsvorrichtung 40 angehoben ist. Bei der Dichtungsvorrichtung 40 handelt es sich somit um eine selbstständige Einheit, mit welcher die Dichtung 6 gehalten und positioniert wird.

Das Anheben und Absenken der Dichtung 6 erfolgt über die Betätigungselemente 45, welche gemäß der Figur 5 als Stößel ausgebildet sind. Bei einer vertikalen Bewegung des Betätigungselements 45 wird der Haltesteg 43 und die darauf befindliche Dichtung 6 vom Stützrand 34 des Mischbehälters 8 angehoben oder abgesenkt. Die Betätigungselemente 45 sind entweder mit der Steuerung der Hebevorrichtung 38 verbunden oder weisen einen eigenen Antrieb auf.

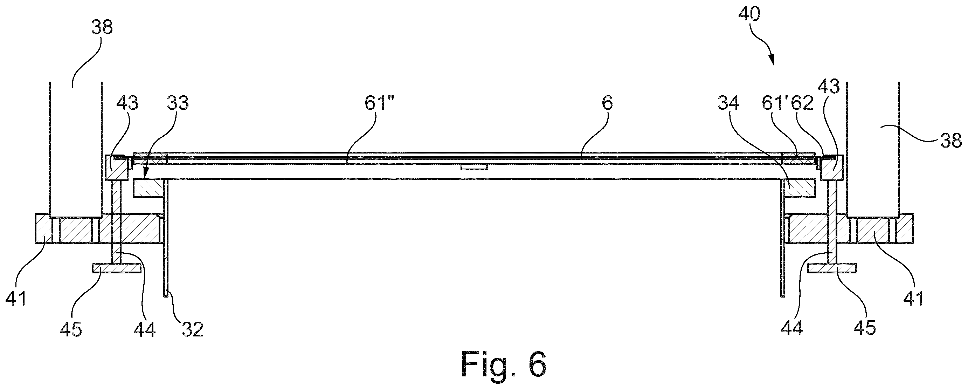

Mit der Figur 6 wird die erfindungsgemäße Dichtungsvorrichtung 40 im Detail gezeigt. An den seitlichen Hubstangen 38 ist jeweils eine Hebeplatte 41 vorhanden, welche unter den Stützrand 34 des Mischbehälters 8 greift, um diesen anzuheben oder abzusenken. Die Dichtungsvorrichtung 40 ist an der Hebeplatte 41 angeordnet. Die Dichtung 6 besteht aus einem oberseitigen Dichtring 61', einem mittigen Verstärkungsring 62 und unterseitigem Dichtring 61". Der Verstärkungsring 62 liegt auf dem Haltesteg 43 auf und wird von dem Haltesteg 43 gehalten.

Gemäß der Figur 6 ist die Dichtung 6 beabstandet von dem Stützrand 34 des Mischbehälters 8. Dies wird durch eine vertikale Bewegung der Betätigungselemente 45 erreicht, welche über die Hebestangen 44 die Haltestege 43 anheben.

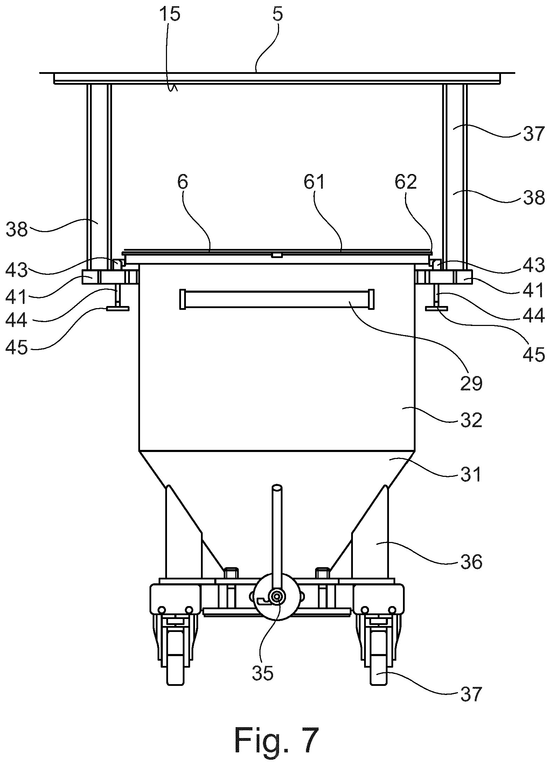

Figur 7 zeigt den Mischer 1, wobei sich der Mischbehälter 8 unter dem Mischerkopf 2 befindet. Dieser Zustand liegt entweder vor dem Mischvorgang oder nach dem Mischvorgang vor. Die Hubstangen 38 der Hebevorrichtung 37 sind ausgefahren, so dass der Mischbehälter 8 auf dem Boden steht. Die Hebeplatten 41 sind von dem Stützrand 34 des Mischbehälters 8 beabstandet. Die Dichtung 6 liegt auf der Stirnfläche 33 des Stützrands 34 auf. Die Haltestege 43 weisen keinen Kontakt zu der Dichtung 6 auf.

Um die Dichtung 6 von dem Mischbehälter 8 zu trennen, wird die Dichtungsvorrichtung eingesetzt. Die Betätigungselemente 45 werden nach oben bewegt, wodurch die Haltestege 43 unter den Verstärkungsring 62 greifen und damit die Dichtung 6 vom Mischbehälter 8 abheben.

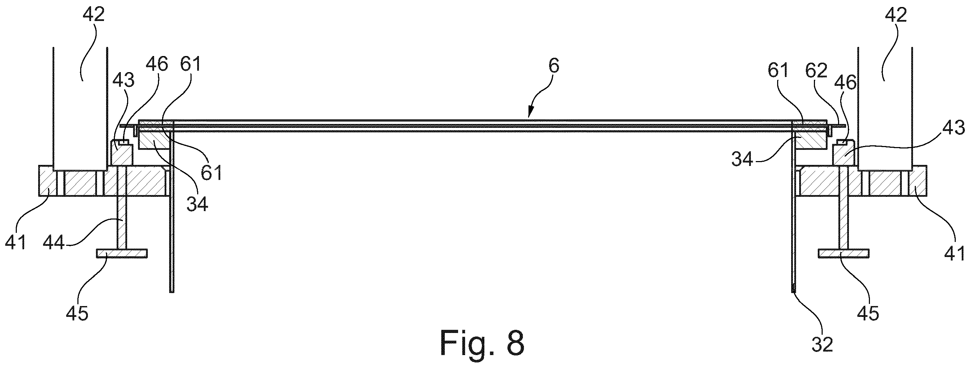

Mit der Figur 8 wird der Zustand gemäß der Figur 7 im Detail gezeigt. Die Hebeplatten 41 sind von dem Stützrand 34 beabstandet. Die Dichtung 6 liegt auf dem Stützrand 34 auf. Die Haltestege 43 sind eingefahren und weisen eine stufenförmige Ausnehmung 46 für die Aufnahme des Verstärkungsrings 61 auf.

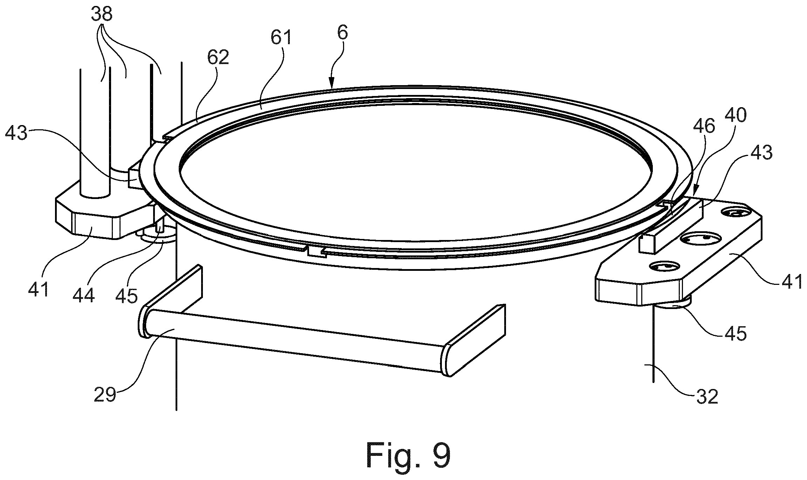

Figur 9 zeigt eine perspektivische Darstellung der Dichtungsvorrichtung 40, wobei die Dichtung 6 auf dem Rand des Mischbehälters 8 aufliegt. Bei Bedarf greift der Haltesteg 43 unter den Verstärkungsring 61 und hebt diesen in vertikaler Richtung vom Stützrand 34 des Mischbehälters 8 ab.

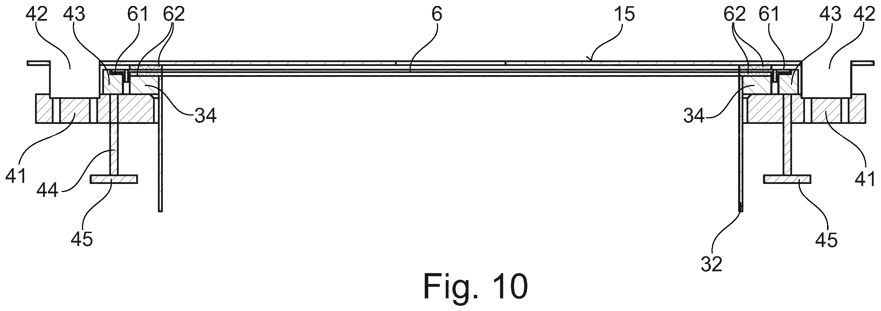

Mit der Figur 10 wird der Mischer 1 mit dem Mischbehälter 8 in der Arbeitsstellung gezeigt, wobei die Dichtung 6 an der Dichtfläche 15 der Abdeckung 5 des Mischerkopfes 2, sowie auf der Fläche des Stützrandes 34 des Mischbehälters 8 aufliegt. Der Haltesteg 43 liegt auf der Hebeplatte 41 auf. Der Verstärkungsring 61 der Dichtung 6 liegt in der stufenförmigen Ausnehmung 46 des Haltestegs 43 und ist dadurch gegen ein Verrutschen gesichert. Vorzugsweise ist die Höhe des Haltestegs 43 so ausgebildet, dass in der Arbeitsstellung die Dichtung 6 fest an die beiden Flächen des Mischbehälters 8 und des Mischerkopfes 2 gedrückt wird.

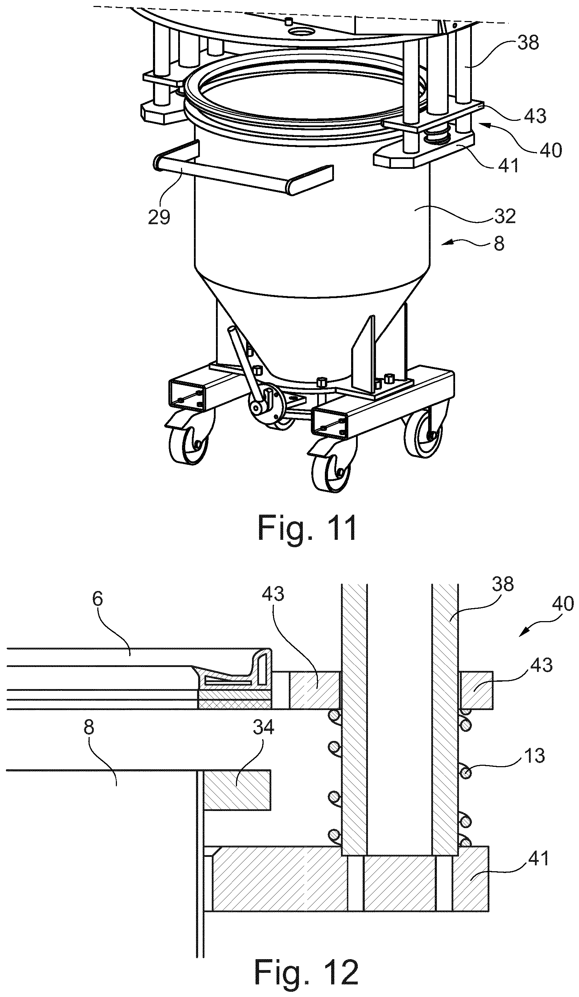

Mit den Figuren 11 und 12 wird eine weitere Ausführungsform der Dichtungsvorrichtung 40 gezeigt. Zwischen der Hebeplatte 41 und dem Haltesteg 43 ist eine Feder 13 angeordnet. Durch die Federkraft der Feder 13 wird der Haltesteg 43 von der Hebeplatte 41 in vertikaler Richtung beabstandet. Dies bewirkt, dass der Haltesteg 43 die Dichtung 6 anhebt und somit vom Stützrand 34 des Mischbehälters 8 abhebt. Dadurch ist es möglich, dass der Mischbehälter 8 unter den Mischerkopf 2 ein- und ausgefahren werden kann, während die Dichtung 6 durch die Dichtungsvorrichtung 40 unter dem Mischerkopf 2 gehalten wird. Die Dichtung 6 verbleibt somit bei einem Wechsel des Mischbehälters 8 unterhalb des Mischerkopfes 2 und ist weder mit dem Mischerkopf 2, noch mit dem Mischbehälter 8 verbunden.

Wenn die Hebevorrichtung 37 mit den Hubstangen 38 und den Hebeplatten 41 den Mischbehälter 8 bis zur Arbeitsstellung anhebt, so findet zuerst ein Kontakt mit der Dichtung 6 und der Dichtfläche 15 der Abdeckung 5 statt. Durch ein weiteres Anheben mit der Hebevorrichtung 37 wird die Federkraft der Feder 13 überwunden bis die Dichtung 6 auch auf dem Stützrand 34 des Mischbehälters 8 aufliegt.

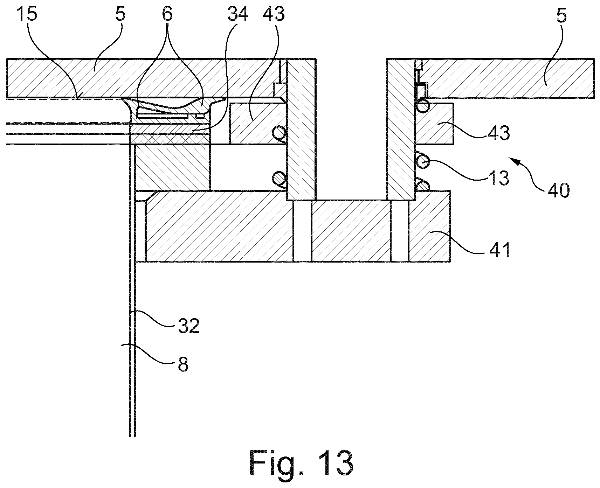

Figur 13 zeigt die Dichtungsvorrichtung 40, wobei die Hebevorrichtung 37 den Mischbehälter 8 gegen die Abdeckung 5 des Mischerkopfes 2 drückt. Die Feder 13 zwischen der Hebeplatte 41 und dem Haltesteg 43 ist teilweise komprimiert. Die Dichtung 6 liegt an der Dichtfläche 15 der Abdeckung 5 des Mischerkopfes 2, sowie auf der Fläche des Stützrandes 34 des Mischbehälters 8 an.

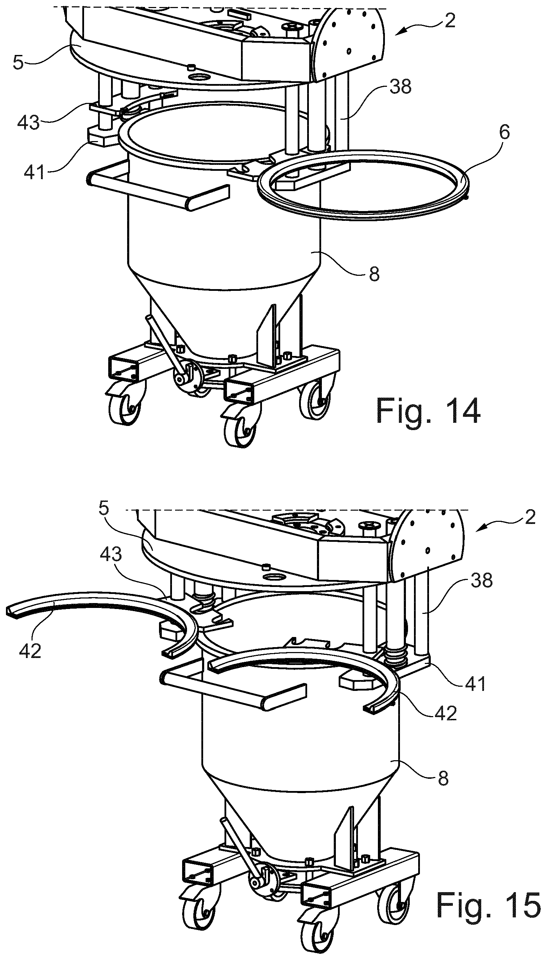

Mit den Figuren 14 und 15 wird eine weitere Ausführungsform der Dichtungsvorrichtung 40 gezeigt, welche schwenkbar an dem Mischer 1 angeordnet ist.

Bei der Figur 14 ist die Dichtung 6 schwenkbar an der Hubstange 38 der Hebevorrichtung 37 angeordnet. Vorzugsweise ist die Dichtung 6 durch den Verstärkungsring 62 verstärkt. Die schwenkbare Halterung kann entweder eigenständig oder als Haltesteg 43 ausgebildet sein.

Der Haltesteg 43 lässt sich durch die Hebestangen 44 in vertikaler Richtung bewegen, wodurch die Dichtung 6 auf den Mischbehälter 8 aufgesetzt und wieder hochgehoben werden kann. Es ist jedoch auch möglich, dass der Haltesteg 43 die gleiche vertikale Position aufweist und dadurch die Dichtung auf einer vorbestimmten vertikalen Position hält.

Durch die schwenkbare Lagerung der Dichtungsvorrichtung 40 ist es möglich, die Dichtung 6 aus dem Mischer 1 heraus zu schwenken. Dies ist immer dann vorteilhaft, wenn z.B. die Dichtung 6 gereinigt oder ausgetauscht werden soll.

Figur 15 zeigt eine weitere Ausführungsform der schwenkbaren Dichtungsvorrichtung 40, wobei die Dichtung 42 zweigeteilt ist. Die beiden Teile der Dichtung 42 sind halbkreisförmig ausgebildet, wobei jedes Teil jeweils schwenkbar an der Hubstange 38 der Hebevorrichtung 37 angeordnet ist.

Vorzugsweise sind beide Teile der Dichtung 42 an den Haltestegen 43 angeordnet, welche vertikal verschiebbar sind. Dies ermöglicht ein einfaches Zusammenfügen der beiden Dichtungsteile unterhalb des Mischerkopfes 2.

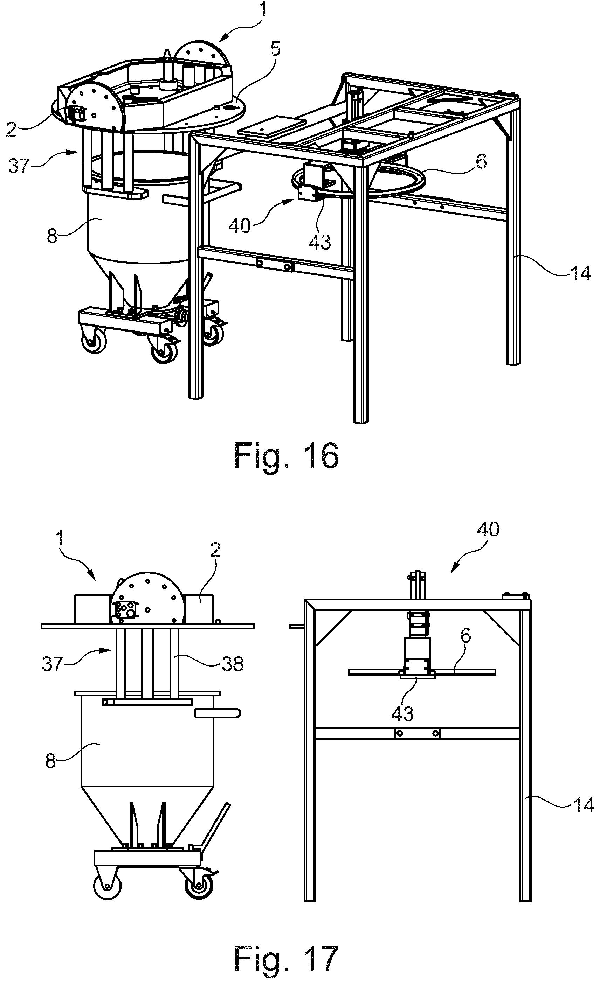

Mit den Figuren 16 und 17 wird eine weitere Ausführungsform der erfindungsgemäßen Dichtungsvorrichtung 40 gezeigt, welche an einem Gestell 14 angeordnet ist. Bei dieser Ausführungsform wird die Dichtung 6 unabhängig von dem Mischer 1 auf den Mischbehälter 8 aufgelegt bzw. von dem Mischbehälter 8 abgehoben. Der Mischbehälter 8 wird dann z.B. mit bereits aufgelegter Dichtung 6 unter den Mischerkopf 2 des Mischers 1 gefahren. Nach dem Mischvorgang wird der Mischbehälter 8 wieder unter das Gestell 14 gefahren und die Dichtung wird wieder abgehoben.

Gemäß der Figur 16 weist das Gestell 14 einen Tragrahmen auf, welcher mit vier Füßen auf dem Boden steht. Das Gestell 14 ist so hoch ausgebildet, dass der Mischbehälter 8 unter das Gestell 14 gefahren werden kann. Am Gestell 14 ist die Dichtungsvorrichtung 40 angeordnet, welche die Dichtung 6 von oben auf die Stirnfläche 33 des Mischbehälters 8 auflegt. Vorzugsweise weist die Dichtungsvorrichtung 40 ebenfalls einen Haltesteg 43 mit Hebestangen 44 auf, welche die Dichtung 6 in vertikaler Richtung bewegen. Die Figur 16 zeigt nur eine beispielhafte Ausbildung des Gestells 14. Das Gestell 14 kann ferner auch als einfacher Tragrahmen an einer Produktionshalle befestigt sein.

Figur 17 zeigt eine Seitenansicht des Mischers 1 mit dem Mischerkopf 2 und dem Gestell 14. Das Gestell 14 ist als separate Einheit ausgebildet und weist die Dichtungsvorrichtung 40 auf.

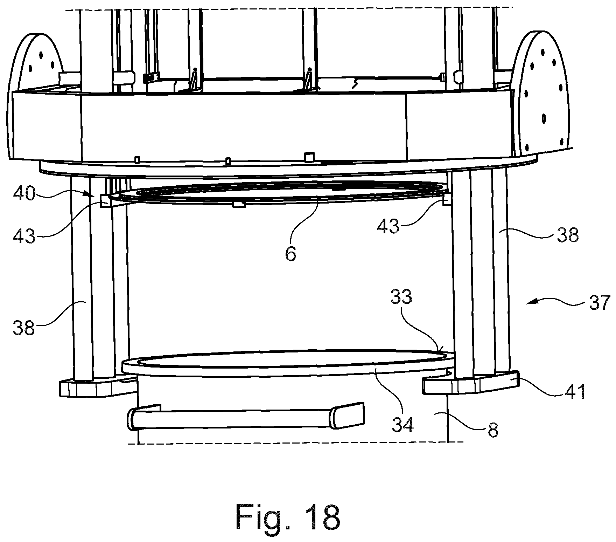

Mit den Figuren 18, 19, 20, 21 und 22 wird eine weitere Ausführungsform der erfindungsgemäßen Dichtungsvorrichtung 40 gezeigt. Bei den Figuren 18, 19 und 20 ist die Dichtungsvorrichtung 40 als (aktive) Dichtungshalterung 4 ausgebildet. Bei den genannten Ausführungsformen erfolgt eine aktive Positionierung der Dichtung 6 von oben, d.h. vom Mischer 1 bzw. Mischerkopf 2 aus.

Gemäß der Figur 18 liegt die Dichtung 6 auf den Haltestegen 43 auf, welche vertikal verschiebbar ausgebildet sind. Die Haltestege 43 werden von Führungsstangen 17 gehalten und geführt, wobei im Bereich der Kopfteile 18 der Führungsstangen 17 mindestens ein Antrieb für die vertikale Bewegung vorhanden ist. Die Dichtung 6 ist weit nach oben gefahren, so dass der Mischbehälter 8 leicht unter den Mischerkopf 2 eingefahren werden kann.

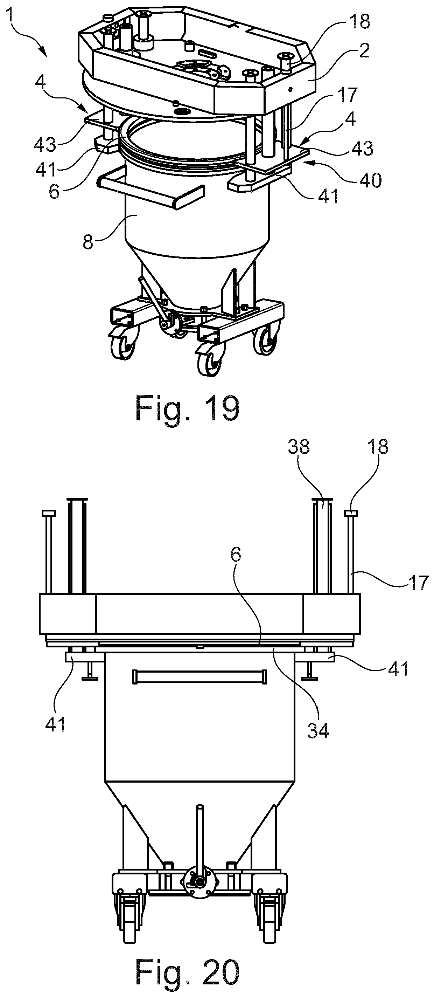

Figur 19 zeigt die Dichtungsvorrichtung 40, wobei die Dichtungshalterung 4 nach unten gefahren ist und die Dichtung 6 auf der Stirnfläche 34 des Mischbehälters 8 abgelegt ist. Die Dichtungshalterung 4 weist vertikal verschiebbare Haltestege 43 auf, welche die Dichtung 6 auf dem Mischbehälter 8 ablegen oder wieder aufnehmen. Die Bewegung der Haltestege 43 erfolgt über eine vertikale Bewegung, die Führungsstangen 17 und den damit verbundenen Antrieb, welcher beispielsweise als Spindelmotor, hydraulischer Antrieb oder dergleichen ausgebildet ist. Entscheidend ist, dass durch den eigenen Antrieb der Führungsstangen 17 die Haltestege 43 unabhängig von der Bewegung der Hebeplatten 41 bewegt werden können.

Mit der Figur 20 wird der Mischer 1 gezeigt, wobei der Mischbehälter 8 an dem Mischerkopf 2 angedockt ist. Der Mischbehälter 8 ist von der Hebevorrichtung 37 angehoben, welche aus den Hebeplatten 41, den Hubstangen 38 und einem Antrieb 7 besteht. Die Haltestege 43 sind ebenfalls weit nach oben gefahren. Die Dichtung 6 befindet sich zwischen dem Mischbehälter 8 und dem Mischerkopf 2.

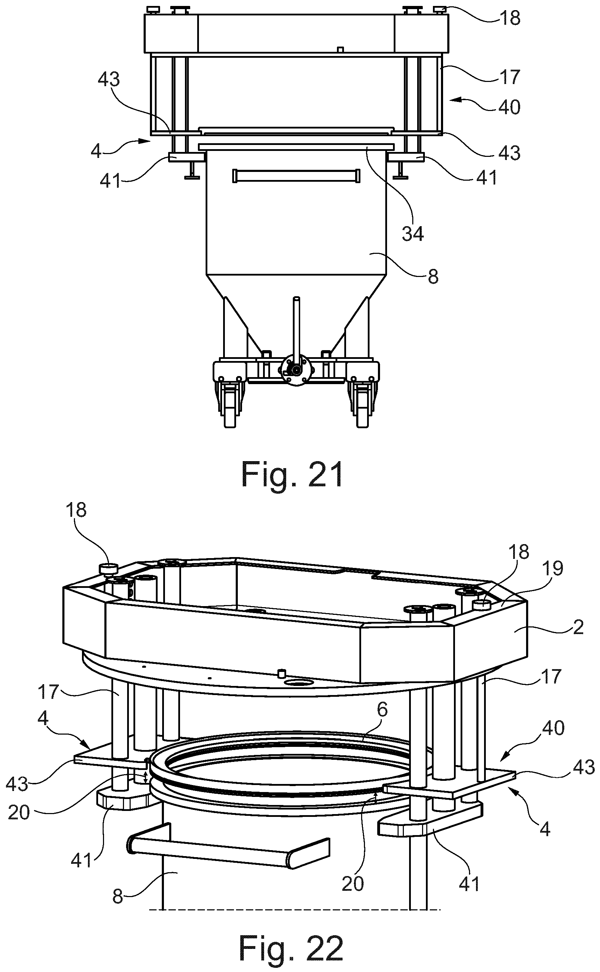

Mit den Figuren 21 und 22 wird die Dichtungsvorrichtung 40 mit einer passiven Dichtungshalterung 4 gezeigt. Die Dichtungshalterung 4 weist keinen eigenen Antrieb auf, sondern hält die Dichtung 6 nur in einer bestimmten Position im Zwischenraum zwischen dem Mischerkopf 2 und dem Mischbehälter 8.

Die Dichtungshalterung 4 besteht aus den Haltestegen 43 und den Führungsstangen 17. Die Führungsstangen 17 weisen jeweils Kopfteile 18 auf, welche mit mindestens einem Anschlag 19 im Bereich des Mischerkopfes 2 zusammenwirken. Ist die Hebevorrichtung 37 für den Mischbehälter 8 komplett nach unten gefahren, so liegen die Kopfteile 18 auf den Anschlägen 19 auf. Die Länge der Führungsstangen 17 ist so gewählt, dass die Haltestege 43 die Dichtung 6 mit einem Abstand 20 über dem Mischbehälter 8, d.h. beabstandet von der Stirnfläche 33 des Mischbehälters 8, halten.

Mit der Dichtungshalterung 4 wird somit die Dichtung 6 im Zwischenraum zwischen dem Mischerkopf 2 (Oberteil) und dem Mischbehälter 8 (Unterteil) positioniert. Das Positionieren ist ein Halten der Dichtung 6 in einer bestimmten Position. Die Dichtung 6 befindet sich im Zwischenraum oberhalb des Mischbehälters 8 und wird beim Anheben des Mischbehälters 8 in Richtung des Mischerkopfes 2 von dem Mischbehälter 8 bzw. der Stirnfläche 33 des Mischbehälters 8 mitgenommen. Nach dem Verarbeitungsprozess wird der Mischbehälter 8 wieder in vertikaler Richtung nach unten bewegt, wobei die Dichtung 6 wieder auf der Dichtungshalterung 4 abgelegt wird.

Alternativ werden beim Anheben des Mischbehälters 8 mit der Hebevorrichtung 38 die Haltestege 43 mitgenommen und beim Absenken des Mischbehälters 8 wieder nach unten gelassen.

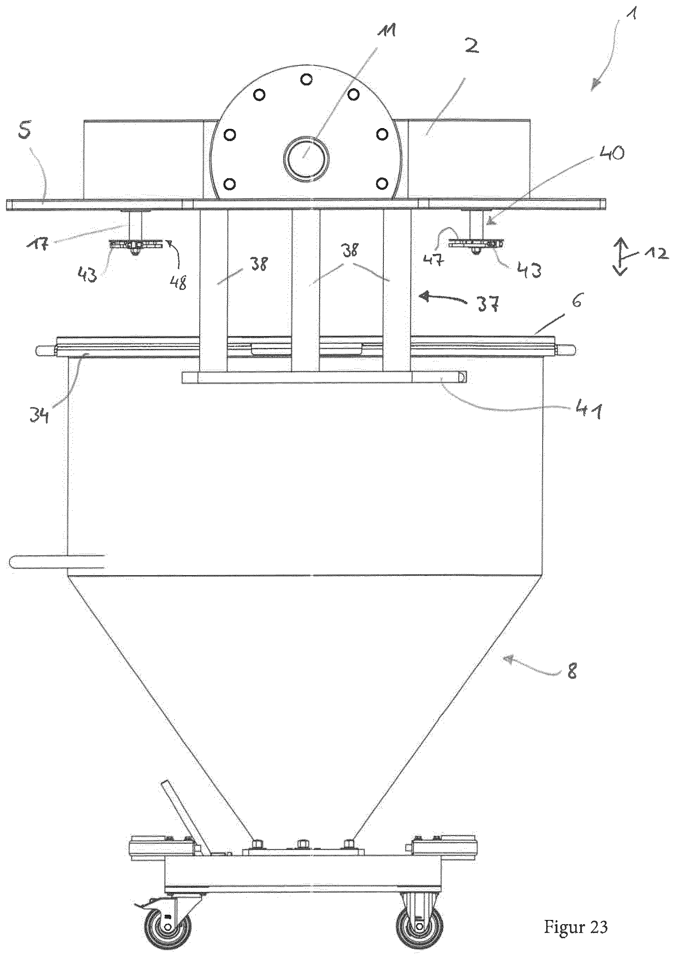

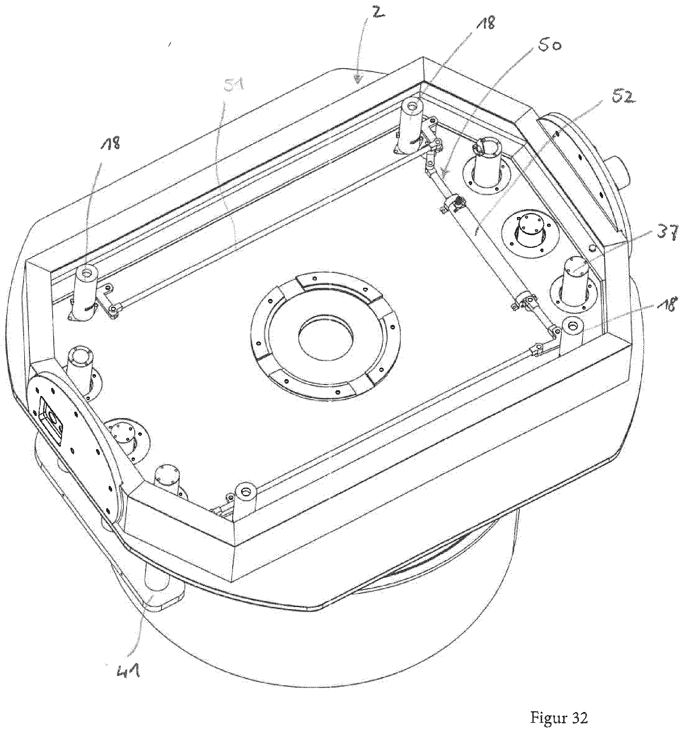

Mit den Figuren 23 bis 32 wird eine weitere bevorzugte Ausführungsform der erfindungsgemäßen Dichtungsvorrichtung 40 gezeigt.

Die Figur 23 zeigt den Mischer 1 mit seinem Mischkopf 2 und einem Mischbehälter 8 in einer Seitenansicht. Der Mischbehälter 8 befindet sich unter dem Mischkopf 2. Die Hebevorrichtung 37 für den Mischbehälter 8 ist nach unten gefahren. Dies bedeutet, dass die Hubstangen 38 und die Hebeplatten 41 der Hebevorrichtung 37 vertikal ausgefahren sind und sich unterhalb des Stützrands 34 des Mischbehälters 8 befinden.

Am Mischkopf 2 ist die Dichtungsvorrichtung 40 angeordnet. Die Dichtungsvorrichtung 40 ist als Dichtungshalterung 4 ausgebildet und weist mehrere vertikal bewegbare Führungsstangen 17 auf, an deren Ende jeweils eine Aufnahme 48 für die Dichtung 6 angeordnet ist. Bei der Aufnahme 48 handelt es sich um zwei beabstandete Platten, d.h. um den unteren Haltesteg 43 und den oberen Anschlag 47, zwischen welchen die Dichtung 6 bzw. der Verstärkungsring 62 von der Dichtung 6 gehalten wird. Der untere Haltesteg 43 und der obere Anschlag 47 sind derart beabstandet, dass die Dichtung 6 entweder formschlüssig und/oder kraftschlüssig aufgenommen wird und dadurch von der Dichtungsvorrichtung 40 bewegbar ist.

Mit Hilfe der Dichtungsvorrichtung 40 lässt sich nun die Dichtung 6 in vertikaler Richtung (Pfeilrichtung 12) anheben und absenken. Die erfindungsgemäße Dichtungsvorrichtung 40 ist somit unabhängig von der Hebevorrichtung 37 für den Mischbehälter 8 und bewirkt ein Halten der Dichtung 6 unterhalb des Mischkopfes 2. Dadurch kann beispielsweise der Mischbehälter 8 unter dem Mischer 1 getauscht werden, ohne dass die Dichtung 6 vom Mischer 1 entfernt wird. Des Weiteren kann die Dichtung 6 unabhängig von dem Mischbehälter 8 getauscht werden.

Mit der erfindungsgemäßen Dichtungsvorrichtung 40 wird ferner ein Festsetzen der Dichtung 6 an dem Mischbehälter 8 bzw. an dem Mischerkopf 2 vermieden, da die Dichtung 6 nach jedem Mischvorgang von den beiden Bauteilen (Mischbehälter, Mischerkopf) gelöst und in vertikaler Position gehalten wird. Durch die Dichtungsvorrichtung 40 wird eine "fliegende Dichtung" erreicht.

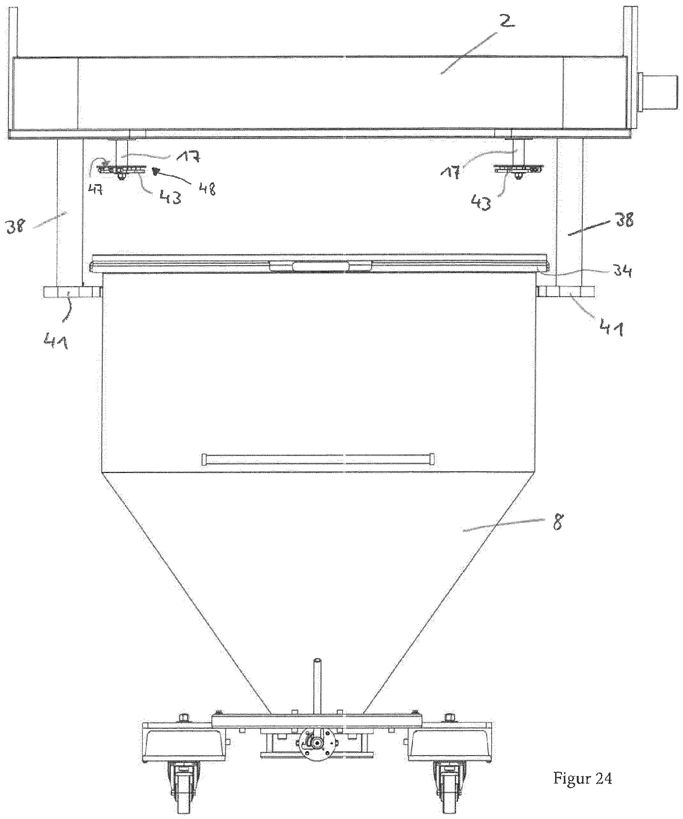

Die Figur 24 zeigt den Mischer 1 und den Mischbehälter 8, auf dessen Rand die Dichtung 6 abgelegt ist. Die Hebevorrichtung 37 für den Mischbehälter 8 ist vertikal nach unten gefahren. Die Dichtungsvorrichtung 40 ist vertikal nach oben gefahren. Eine solche Situation liegt beispielsweise vor, wenn der Mischbehälter 8 unter den Mischerkopf 2 gefahren wird, wobei vorher eine Dichtung 6 auf den Rand des Mischbehälters 8 aufgelegt wurde. Das Auflegen der Dichtung 6 auf den Rand des Mischbehälters 8 erfolgt beispielsweise händisch oder maschinell. Des Weiteren ist es möglich, dass die Dichtung 6 in die jeweiligen Aufnahmen 48 der Dichtungsvorrichtung 40 einlegbar sind.

Die Dichtungsvorrichtung 40 besteht aus den vertikal verschiebbaren Führungsstangen 17, an deren Enden jeweils mindestens eine Aufnahme 48 zum Halten der Dichtung 6 vorgesehen ist. Die Führungsstangen 17 sind optional um deren Längsachse drehbar ausgebildet, so dass die Aufnahmen 48 zu der Dichtung 6 hingedreht und wieder weggedreht werden. Hierfür sind die Führungsstangen 17 vorzugsweise dergestalt am Mischerkopf 2 angeordnet, dass durch das Drehen der Führungsstangen 17 die Aufnahmen 48 in Eingriff mit der Dichtung 6 bringbar sind. Ebenso ist es dann möglich, dass durch ein Drehen der Führungsstangen 17 die Aufnahmen 48 außer Eingriff bringbar sind, so dass die Aufnahmen 48 nicht mehr im Dichtungsbereich zwischen dem Mischerkopf 2 und dem Mischbehälter 8 sind.

Bei einer weiteren bevorzugten Ausführungsform weist der Mischerkopf 2 im Bereich der Führungsstangen 17 jeweils Ausnehmungen für die Aufnahmen 48 auf. Die Aufnahmen 48 können dadurch in den Mischerkopf 2 versenkt werden, so dass ausschließlich die Dichtung 6 zwischen dem Mischerkopf 2 und dem Mischbehälter 8 vorhanden ist.

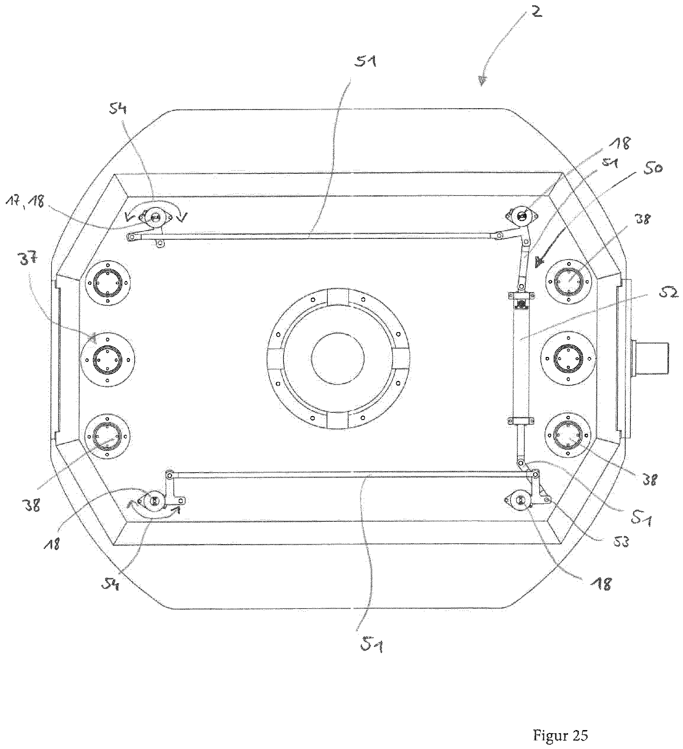

Mit der Figur 25 wird eine Draufsicht auf den Mischerkopf 2 gezeigt. Der Mischkopf 2 weist die Drehvorrichtung 50 für die Aufnahmen 48 auf. Die Drehvorrichtung 50 besteht aus mindestens einem Antrieb 52, welcher vorzugsweise als Linearantrieb ausgebildet ist. Dies kann beispielswiese ein Spindelmotor, ein hydraulischer Antrieb oder dergleichen sein. Der Antrieb 52 ist über Gelenke und Koppelstangen 51 mit den Kopfteilen 18 der Führungsstangen 17 verbunden, wobei der Antrieb 52 eine Drehbewegung der Führungsstangen 17 bewirkt. Die Aufnahmen 48 für die Dichtung 6 sind drehfest mit den Führungsstangen 17 verbunden. Durch die Drehung der Führungsstangen 17 werden somit die Aufnahmen 48 in Pfeilrichtung 54 gedreht, was eine Drehbewegung in Richtung der Dichtung 6 und weg von der Dichtung 6 bewirkt.

Die Figur 25 zeigt beispielhaft die Position der Kopfteile 18, wenn die Dichtung 6 auf dem Mischbehälter 8 abgelegt ist und die Aufnahmen 48 von der Dichtung 6 weggedreht sind.

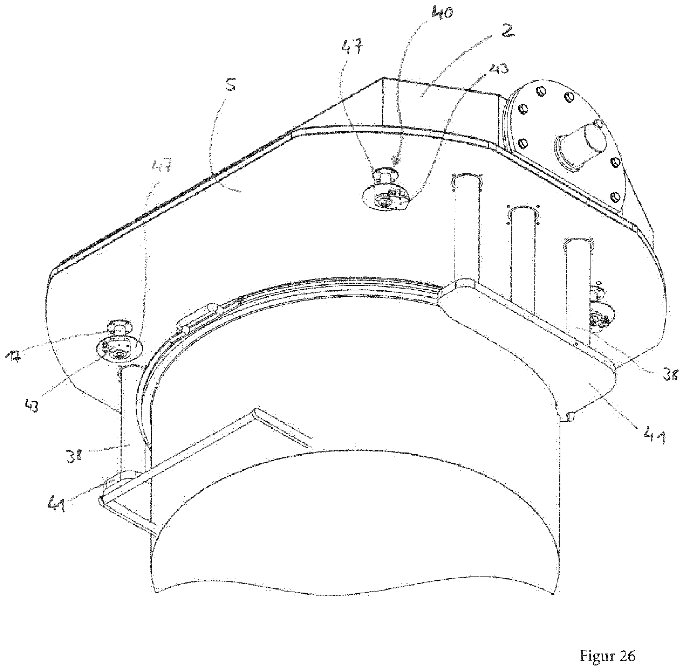

Mit der Figur 26 wird perspektivisch der Mischerkopf 2 von unten gezeigt, wobei die Aufnahmen 48 für die Dichtung 6 weggedreht sind. Die Dichtung 6 liegt auf dem Rand des Mischbehälters 8 auf.

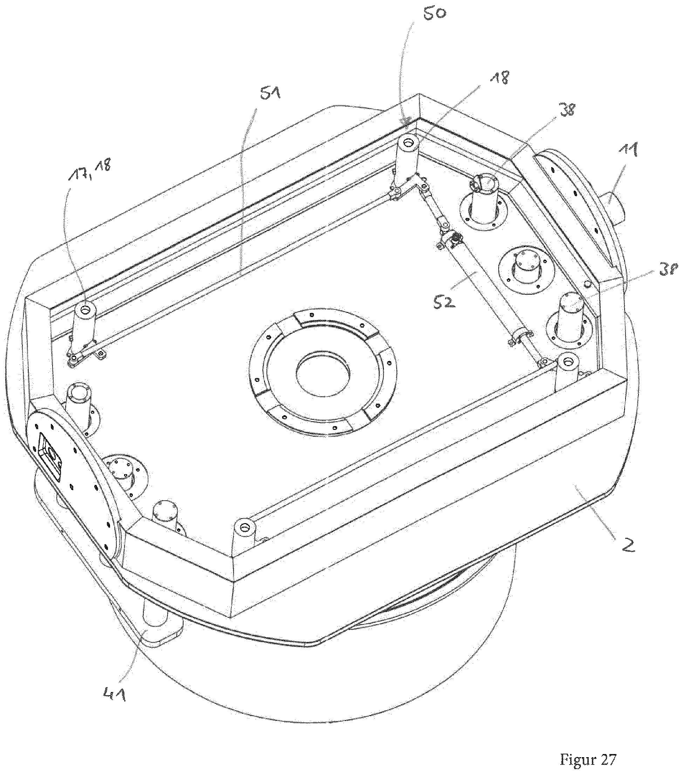

Figur 27 zeigt eine perspektivische Draufsicht auf den Mischerkopf 2 mit der Dichtungsvorrichtung 40. Der Mischerkopf 2 weist zylindrische Bohrungen auf, durch welche die Führungsstangen 17 und die Hubstangen 38 durchgreifen. Vorzugsweise befinden sich der Antrieb 52 für die Dichtungsvorrichtung 40 und die Hubzylinder 39 für die Hebevorrichtung 37 oberhalb des Mischerkopfes 2. Es ist aber auch möglich, dass die Antriebe 52, 39 neben dem Mischerkopf 2 angeordnet sind.

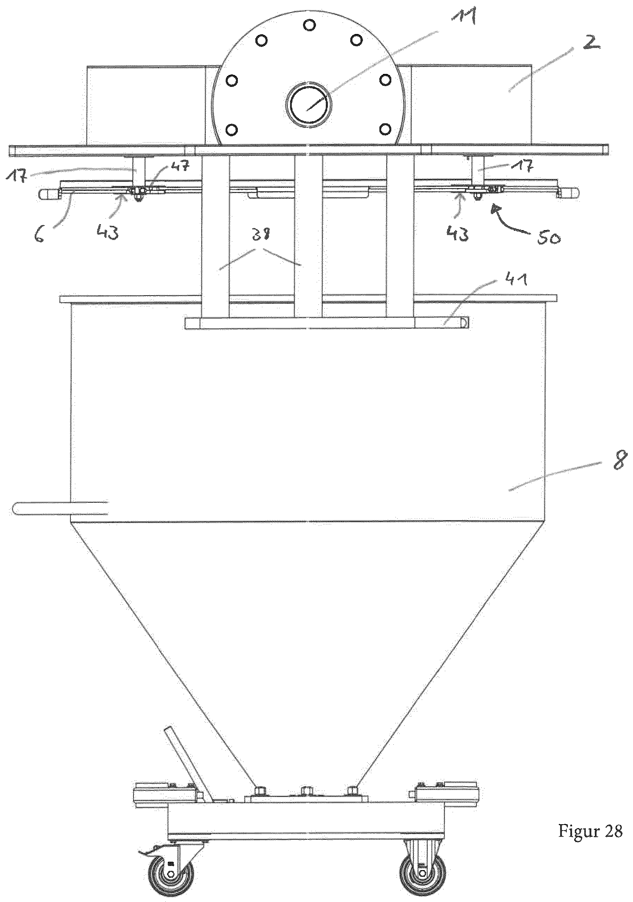

Mit der Figur 28 wird die Dichtungsvorrichtung 40 mit fliegender bzw. eingelegter Dichtung 6 gezeigt. Die Dichtung 6 wird von den Aufnahmen 48 gehalten. Die Aufnahme 48 besteht aus dem oberen, tellerförmigen Anschlag 47 und dem unteren Haltesteg 43. Zwischen dem Anschlag 47 und dem Haltesteg 43 wird die Dichtung 6 gehalten. Die Halterung der Dichtung 6 erfolgt kraftschlüssig und/oder formschlüssig. Die Führungsstangen 17 sind vertikal verschiebbar und drehbar am Mischerkopf 2 angeordnet. Gemäß der Figur 28 wird die Dichtung 6 durch die Dichtungsvorrichtung 40 zwischen dem Mischerkopf 2 und dem Mischbehälter 8 gehalten.

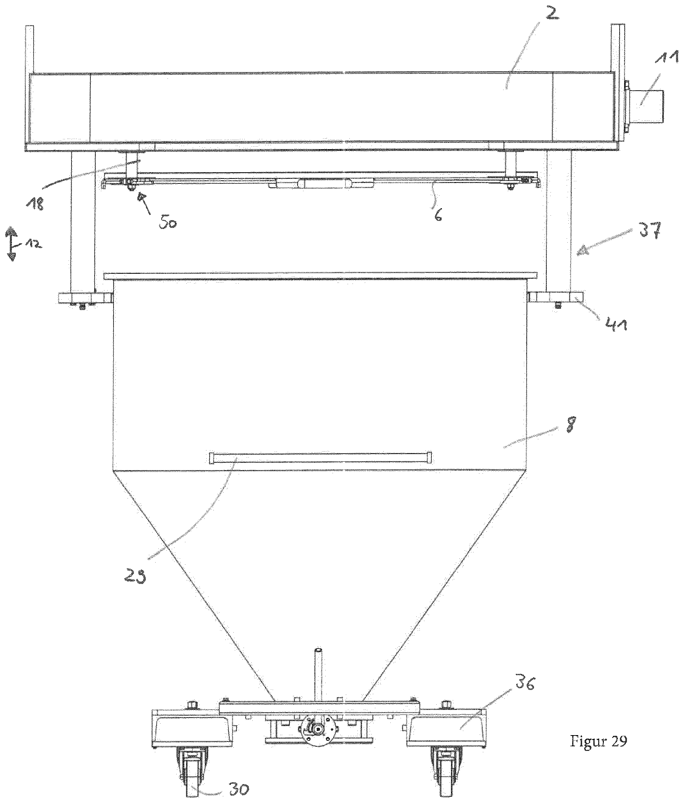

Figur 29 zeigt die Dichtungsvorrichtung 40 mit fliegender bzw. eingelegter Dichtung 6 in der Seitenansicht. Die Dichtung 6 befindet sich in den Aufnahmen 48. Die Führungsstangen 17 sind vertikal nach oben gefahren.

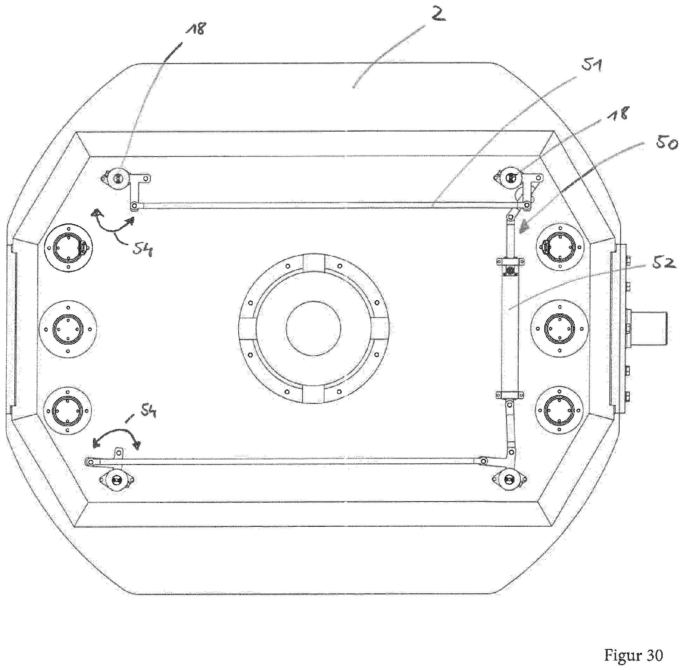

Mit der Figur 30 wird der Mischerkopf 2 in der Draufsicht gezeigt, wobei die Aufnahmen 48 der Dichtungsvorrichtung 40 die Dichtung 6 halten. Der Antrieb 52 hat hierfür die Koppelstangen 51 bewegt, was eine Drehbewegung der Kopfteile 18 der Führungsstangen 17 in Pfeilrichtung 54 bewirkt hat.

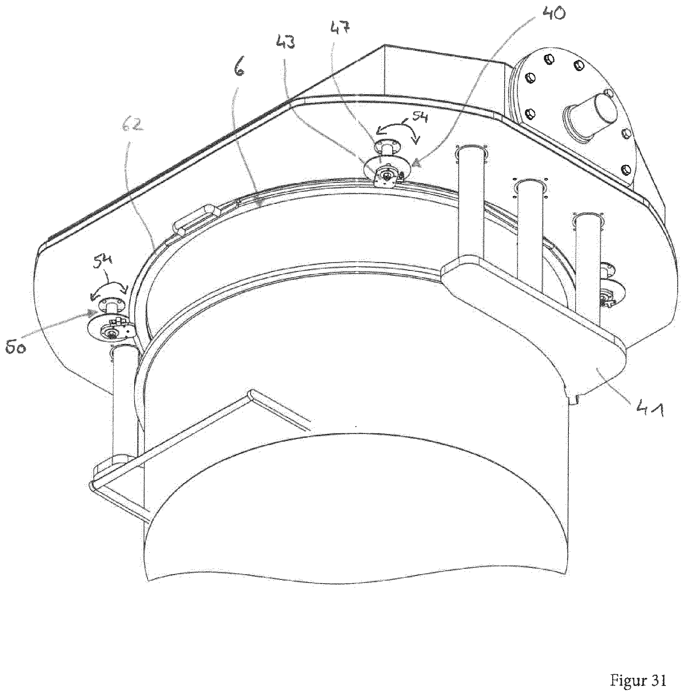

Die Figur 31 zeigt den Mischer 1 von unten, wobei die Dichtung 6 von der Dichtungsvorrichtung 40 in einer vertikalen Position unterhalb des Mischerkopfes 2 gehalten wird. Die Aufnahmen 48 sind in Richtung der Dichtung 6 gedreht (Pfeilrichtung 54). Die Halterung der Dichtung 6 erfolgt entweder an dem Dichtring 61 oder an dem Verstärkungsring 62. Es ist ferner auch möglich, dass die Dichtung 6 mindestens einen Vorsprung aufweist, welcher mit der Aufnahme 48 der Dichtungshalterung 4 zusammenwirkt.

Die erfindungsgemäße Dichtungsvorrichtung 40 wird bei einer verfahrenstechnischen Anlage eingesetzt. Vorzugsweise ist die verfahrenstechnische Anlage als Mischer 1 ausgebildet, wobei das Oberteil ein Mischerkopf 2 und das Unterteil ein Mischbehälter 8 ist.

Die Dichtungsvorrichtung 40 ist am Mischerkopf 2 angeordnet, wobei die mindestens eine Aufnahme 48 die Dichtung 6 zwischen dem Mischerkopf 2 und dem Mischbehälter 8 hält. Dies kann beispielsweise eine formschlüssige und/oder kraftschlüssige Halterung der Dichtung 6 sein. Die Aufnahme 48 ist in vertikaler Richtung gegenüber dem Mischerkopf 2 bewegbar und in horizontaler Richtung um die Längsachse der Führungsstange drehbar.

Mit der erfindungsgemäßen Dichtungsvorrichtung 40 ist es daher möglich, eine Dichtung 6 zwischen dem Mischerkopf 2 des Mischers 1 und dem Mischbehälter 8 zu positionieren, wobei die Dichtung 6 von der Dichtungsvorrichtung 40 gehalten wird und in vertikaler Richtung bewegbar ist.

Des Weiteren lassen sich die Aufnahmen 48 für die Dichtung 6 mit Hilfe der Drehvorrichtung 50 zur Dichtung 6 hin- oder von der Dichtung 6 wegdrehen. Dadurch ist es möglich, dass die Dichtung immer nur dann von der Dichtungsvorrichtung 40 gehalten wird, wenn z.B. der Mischbehälter 8 unter dem Mischerkopf 2 ausgetauscht wird, jedoch die gleiche Dichtung 6 für den folgenden Mischbehälter 8 verwendet werden soll.

Die Dichtungsvorrichtung 40 kann daher als separate Einheit angesehen werden, welche unabhängig von dem Mischer 1 und dem Mischbehälter 8 die Dichtung 6 hält und positioniert.

### Zeichnungslegende

- 1.: Mischer
- 2.: Mischerkopf
- 3.: Mischwerkzeug
- 4.: Dichtungshalterung
- 5.: Abdeckung
- 6.: Dichtung
- 7.: Antrieb für 38
- 8.: Mischbehälter
- 9.: Mischwerkzeug
- 10.: Antriebsachse
- 11.: Drehachse
- 12.: Pfeilrichtung
- 13.: Feder
- 14.: Gestell
- 15.: Dichtfläche von 5
- 16.: Hubvorrichtung
- 17.: Führungsstange
- 18.: Kopfteil von 17
- 19.: Anschlag
- 20.: Abstand
- 21.: Schaltschrank
- 22.: Ständer
- 23.: Schwenkantriebsachse
- 24.: Mischerantrieb
- 25.:
- 26.:
- 27.:
- 28.:
- 29.: Griff
- 30.: Räder
- 31.: Boden
- 32.: Seitenwand
- 33.: Stirnfläche
- 34.: Stützrand
- 35.: Auslass
- 36.: Ausnehmung
- 37.: Hebevorrichtung
- 38.: Hubstange
- 39.: Hubzylinder
- 40.: Dichtungsvorrichtung
- 41.: Hebeplatte
- 42.: Dichtung
- 43.: Haltesteg
- 44.: Hebestange
- 45.: Betätigungselement (Stößel)
- 46.: stufenförmige Ausnehmung
- 47.: Anschlag
- 48.: Aufnahme
- 50.: Drehvorrichtung für 50
- 51.: Koppelstange
- 52.: Antrieb für 50
- 53.: Gelenk
- 54.: Drehrichtung
- 61.: Dichtring
- 62.: Verstärkungsring
- 63.: Halterung

## Patentansprüche

1. Dichtungsvorrichtung (40) für einen Mischer (1) für pulver-, grieß- und/oder granulatförmige Stoffe, wobei der Mischer (1) aus einem Mischerkopf (2) und mindestens einem koppelbaren, mobilen Mischbehälter (8) besteht, wobei zwischen dem Mischerkopf (2) und dem Mischbehälter (8) mindestens eine Dichtung anordenbar ist, wobei die Dichtung als eine selbsttragende Dichtung (6, 42, 61, 62) ausgebildet ist, wobei die Dichtungsvorrichtung (40) aus der selbsttragenden Dichtung (6, 42, 61, 62) und einer Hubvorrichtung (16) besteht, wobei die Hubvorrichtung (16) ausgebildet ist, die selbsttragende Dichtung (6, 42, 61, 62) zwischen dem Mischerkopf (2) und dem Mischbehälter (8) zu positionieren und in vertikaler Richtung zu bewegen.

2. Dichtungsvorrichtung (40) nach Anspruch 1, **dadurch gekennzeichnet, dass** die Dichtungsvorrichtung (40) als selbstständige, separate Einheit gegenüber dem Mischerkopf (2) und dem Mischbehälter (8) ausgebildet ist.

3. Dichtungsvorrichtung nach einem der Ansprüche 1 oder 2, **dadurch gekennzeichnet, dass** die Dichtungsvorrichtung (40) schwenkbar am Mischer (1), am Mischbehälter (8) oder an einem Gestell (14) angeordnet ist.

4. Dichtungsvorrichtung nach einem der Ansprüche 1 bis 3, **dadurch gekennzeichnet, dass** die selbsttragende Dichtung (6, 42, 61, 62) aus einem elastischen Dichtring (61, 61', 61") und einem Verstärkungsring (62) besteht, welche einteilig ausgebildet sind.

5. Dichtungsvorrichtung nach einem der Ansprüche 1 bis 4, **dadurch gekennzeichnet, dass** die Hubvorrichtung (16) mindestens einen radial einwärts gegen die selbsttragende Dichtung (6, 42, 61, 62) gerichteten Haltesteg (43) aufweist, welcher vertikal verschiebbar ausgebildet ist, wobei der Haltesteg (43) die selbsttragende Dichtung (6, 42, 61, 62) unterseitig untergreift und gegenüber dem Mischerkopf (2) oder dem Mischbehälter (8) anhebt oder absenkt.

6. Dichtungsvorrichtung (40) mit mindestens einer Dichtung (6, 42, 61, 62), wobei die Dichtungsvorrichtung für die Positionierung der mindestens einen Dichtung (6, 42, 61, 62) im Dichtungsbereich zwischen einem Ober- und einem Unterteil einer verfahrenstechnischen Anlage ausgebildet ist, wobei die Dichtung als eine selbsttragende und eigenständige Dichtung (6, 42, 61, 62) ausgebildet ist, wobei die Dichtungsvorrichtung (40) vertikal bewegbare Führungsstangen (17) aufweist, an deren Enden jeweils mindestens eine Aufnahme (48) zur formschlüssigen und/oder kraftschlüssigen Halterung der Dichtung (6, 42, 61, 62) angeordnet ist.

7. Dichtungsvorrichtung (40) nach Anspruch 6, **dadurch gekennzeichnet, dass** die Aufnahme (48) einen oberen Anschlag (47) und einen unteren Haltesteg (43) aufweist, zwischen welchen die Dichtung (6, 42, 61, 62) gehalten wird.

8. Dichtungsvorrichtung (40) nach Anspruch 6 oder 7, **dadurch gekennzeichnet, dass** die Dichtungsvorrichtung (40) mindestens eine Drehvorrichtung (50) für die Aufnahme (48) aufweist, wobei die Drehvorrichtung (50) die Aufnahme (48) zur Dichtung (6, 42, 61, 62) hindreht oder von der Dichtung (6, 42, 61, 62) wegdreht.

9. Dichtungsvorrichtung (40) nach Anspruch 8, **dadurch gekennzeichnet, dass** die Drehvorrichtung (50) mindestens einen Antrieb (52) aufweist, welcher mit mindestens der Führungsstange (17) verbunden ist, wobei der Antrieb (52) eine Drehbewegung (54) zumindest eines Haltestegs (43) der Aufnahme (48) um die Längsachse der Führungsstange (17) bewirkt.

10. Dichtungsvorrichtung (40) nach einem der Ansprüche 6 bis 9, **dadurch gekennzeichnet, dass** die verfahrenstechnische Anlage als Mischer (1) ausgebildet ist, wobei das Oberteil ein Mischerkopf (2) und das Unterteil ein Mischbehälter (8) ist und dass die Dichtungsvorrichtung (40) am Mischerkopf (2) angeordnet ist.

11. Dichtungsvorrichtung (40) nach Anspruch 10, **dadurch gekennzeichnet, dass** die mindestens eine Aufnahme (48) die Dichtung (6, 42, 61, 62) zwischen dem Mischerkopf (2) und dem Mischbehälter (8) hält, wobei die Aufnahme (48) in vertikaler Richtung bewegbar und in horizontaler Richtung drehbar ist.

12. Mischer (1) für pulver-, grieß- und/oder granulatförmige Stoffe, bestehend aus einem Mischerkopf (2) und mindestens einem koppelbaren Mischbehälter (8), wobei zwischen dem Mischerkopf (2) und dem Mischbehälter (8) mindestens eine Dichtung (6, 42, 61, 62) angeordnet ist, wobei die Dichtung (6, 42, 61, 62) als selbsttragende Dichtung (6, 42, 61, 62) ausgebildet ist, wobei der Mischer (1) eine Dichtungsvorrichtung (40) mit einer Hubvorrichtung (16) aufweist, welche die selbsttragende Dichtung (6, 42, 61, 62) zwischen dem Mischerkopf (2) und dem Mischbehälter (8) positioniert.

13. Mischer (1) nach Anspruch 12, **dadurch gekennzeichnet, dass** der Mischer (1) eine Dichtungsvorrichtung (40) nach einem der Ansprüche 1 bis 12 aufweist.

14. Verfahren zum Mischen von pulver-, grieß- und/oder granulatförmige Stoffen, wobei im Dichtungsbereich zwischen einem Mischerkopf (2) eines Mischers (1) und einem koppelbaren, mobilen Mischbehälter (8) mindestens eine Dichtung angeordnet wird, mit den folgenden Verfahrensschritten:
14.1 Positionieren einer selbsttragenden und eigenständigen Dichtung (6, 42, 61, 62) auf einem Mischbehälter (8) von Hand durch einen Bediener;
14.2 Positionieren des mobilen Mischbehälters (8) unter dem Mischer (1);
14.3 Andocken des Mischbehälters (8) am Mischerkopf (2) des Mischers (1), wobei eine Dichtungsvorrichtung (40), welche als selbständige Einheit gegenüber dem Mischerkopf (2) und dem Mischbehälter (8) ausgebildet ist, in vertikaler Richtung mitgenommen wird;
14.4 Mischen der pulver-, grieß- und/oder granulatförmigen Stoffe;
14.5 Abdocken des Mischbehälters (8) vom Mischerkopf (2);
14.6 Halten der selbsttragenden Dichtung (6, 42, 61, 62) mit der Dichtungsvorrichtung (40) in einer vorbestimmten Position unterhalb des Mischerkopfes (2) des Mischers (1).

15. Verfahren zum Mischen von pulver-, grieß- und/oder granulatförmige Stoffen, wobei im Dichtungsbereich zwischen einem Mischerkopf (2) eines Mischers (1) und einem koppelbaren, mobilen Mischbehälter (8) mindestens eine Dichtung angeordnet wird, mit den folgenden Verfahrensschritten:
15.1 Positionieren einer selbsttragenden und eigenständigen Dichtung (6, 42, 61, 62) auf einem Mischbehälter (8) mit einer Dichtungsvorrichtung (40);
15.2 Positionieren des mobilen Mischbehälters (8) unter dem Mischer (1);
15.3 Andocken des Mischbehälters (8) am Mischerkopf (2) des Mischers (1), wobei die Dichtungsvorrichtung (40), welche als selbständige Einheit gegenüber dem Mischerkopf (2) und dem Mischbehälter (8) ausgebildet ist, in vertikaler Richtung mitgenommen wird;
15.4 Mischen der pulver-, grieß- und/oder granulatförmigen Stoffe;
15.5 Abdocken des Mischbehälters (8) vom Mischerkopf (2);
15.6 Halten der selbsttragenden Dichtung (6, 42, 61, 62) mit der Dichtungsvorrichtung (40) in einer vorbestimmten Position unterhalb des Mischerkopfes (2) des Mischers (1).

## Claims

1. A sealing device (40) for a mixer (1) for powdery, granular, and/or granulated materials, wherein the mixer (1) consists of a mixer head (2) and at least one connectable, mobile mixing container (8), wherein at least one seal can be disposed between the mixer head (2) and the mixing container (8), wherein the seal is designed as a self-supporting seal (6, 42, 61, 62), wherein the sealing device (40) consists of the self-supporting seal (6, 42, 61, 62) and a lifting device (16), wherein the lifting device (16) is designed to position the self-supporting seal (6, 42, 61, 62) between the mixer head (2) and the mixing container (8) and to move it in the vertical direction.

2. The sealing device (40) according to claim 1, **characterised in that** the sealing device (40) is designed as a self-contained, separate unit relative to the mixer head (2) and the mixing container (8).

3. The sealing device according to claim 1 or 2, **characterised in that** the sealing device (40) is pivotably disposed on the mixer (1), on the mixing container (8) or on a frame (14).

4. The sealing device according to any one of claims 1 to 3, **characterised in that** the self-supporting seal (6, 42, 61, 62) consists of an elastic sealing ring (61, 61', 61") and a reinforcement ring (62), which are designed as a single piece.

5. The sealing device according to any one of claims 1 to 4, **characterised in that** the lifting device (16) has at least one holding web (43) directed radially inwardly against the self-supporting seal (6, 42, 61, 62), which holding web (43) is designed to be vertically displaceable, wherein the holding web (43) engages under the self-supporting seal (6, 42, 61, 62) on the underside and raises or lowers it relative to the mixer head (2) or the mixing container (8).

6. A sealing device (40) comprising at least one seal (6, 42, 61, 62), wherein the sealing device is designed for positioning the at least one seal (6, 42, 61, 62) in the sealing area between an upper and a lower part of a process plant, wherein the seal is designed as a self-supporting and self-contained seal (6, 42, 61, 62), wherein the sealing device (40) has vertically movable guide rods (17), at the ends of which at least one receptacle (48) is disposed for the form-fitting and/or force-fitting retention of the seal (6, 42, 61, 62).

7. The sealing device (40) according to claim 6, **characterised in that** the receptacle (48) has an upper stop (47) and a lower holding web (43), between which the seal (6, 42, 61, 62) is held.

8. The sealing device (40) according to claim 6 or 7, **characterised in that** the sealing device (40) has at least one rotary device (50) for the receptacle (48), wherein the rotary device (50) rotates the receptacle (48) toward the seal (6, 42, 61, 62) or away from the seal (6, 42, 61, 62).

9. The sealing device (40) according to claim 8, **characterised in that** the rotating device (50) has at least one drive (52) that is connected to at least the guide rod (17), wherein the drive (52) causes a rotary movement (54) of at least one holding web (43) of the receptacle (48) about the longitudinal axis of the guide rod (17).

10. The sealing device (40) according to any one of claims 6 to 9, **characterised in that** the process plant is designed as a mixer (1), wherein the upper part is a mixer head (2) and the lower part is a mixing container (8), and **in that** the sealing device (40) is disposed on the mixer head (2).

11. The sealing device (40) according to claim 10, **characterised in that** the at least one receptacle (48) holds the seal (6, 42, 61, 62) between the mixer head (2) and the mixing container (8), wherein the receptacle (48) is movable in the vertical direction and rotatable in the horizontal direction.

12. A mixer (1) for powdery, granular, and/or granulated materials, consisting of a mixer head (2) and at least one connectable mixing container (8), wherein at least one seal (6, 42, 61, 62) is disposed between the mixer head (2) and the mixing container (8), wherein the seal (6, 42, 61, 62) is designed as a self-supporting seal (6, 42, 61, 62), wherein the mixer (1) has a sealing device (40) with a lifting device (16) that positions the self-supporting seal (6, 42, 61, 62) between the mixer head (2) and the mixing container (8).

13. The mixer (1) according to claim 12, **characterised in that** the mixer (1) has a sealing device (40) according to any one of claims 1 to 12.

14. A method for mixing powdered, granular, and/or granulated materials, wherein at least one seal is disposed in the sealing area between a mixer head (2) of a mixer (1) and a connectable, mobile mixing container (8), comprising the following method steps:
14.1 positioning a self-supporting and self-contained seal (6, 42, 61, 62) on a mixing container (8) by hand by an operator;
14.2 positioning the mobile mixing container (8) under the mixer (1);
14.3 docking the mixing container (8) to the mixer head (2) of the mixer (1), whereby a sealing device (40), which is designed as a self-contained unit relative to the mixer head (2) and the mixing container (8), is carried along in the vertical direction;
14.4 mixing the powdered, granular, and/or granulated materials;
14.5 undocking the mixing container (8) from the mixer head (2);
14.6 holding the self-supporting seal (6, 42, 61, 62) with the sealing device (40) in a predetermined position below the mixer head (2) of the mixer (1).

15. A method for mixing powdery, granular and/or granulated materials, wherein at least one seal is disposed in the sealing area between a mixer head (2) of a mixer (1) and a connectable, mobile mixing container (8), comprising the following method steps:
15.1 positioning a self-supporting and self-contained seal (6, 42, 61, 62) on a mixing container (8) with a sealing device (40);
15.2 positioning the mobile mixing container (8) under the mixer (1);
15.3 docking the mixing container (8) to the mixer head (2) of the mixer (1), whereby the sealing device (40), which is designed as a self-contained unit relative to the mixer head (2) and the mixing container (8), is carried along in the vertical direction;
15.4 mixing the powdered, granular, and/or granulated materials;
15.5 undocking the mixing container (8) from the mixer head (2);
15.6 holding the self-supporting seal (6, 42, 61, 62) with the sealing device (40) in a predetermined position below the mixer head (2) of the mixer (1).

## Revendications

1. Dispositif d'étanchéité (40) pour un mélangeur (1) pour des matières en poudre, en semoule et/ou en granulés, dans lequel le mélangeur (1) est constitué d'une tête de mélangeur (2) et d'au moins un récipient de mélange mobile (8) pouvant être couplé, dans lequel au moins un joint d'étanchéité peut être disposé entre la tête de mélangeur (2) et le récipient de mélange (8), dans lequel le joint d'étanchéité est réalisé en tant que joint d'étanchéité autoportant (6, 42, 61, 62), dans lequel le dispositif d'étanchéité (40) est constitué du joint d'étanchéité autoportant (6, 42, 61, 62) et d'un dispositif de levage (16), dans lequel le dispositif de levage (16) est réalisé pour positionner le joint autoportant (6, 42, 61, 62) entre la tête de mélangeur (2) et le récipient de mélange (8) et pour le déplacer dans la direction verticale.

2. Dispositif d'étanchéité (40) selon la revendication 1, **caractérisé en ce que** le dispositif d'étanchéité (40) est réalisé en tant qu'unité indépendante et séparée par rapport à la tête de mélangeur (2) et au récipient de mélange (8).

3. Dispositif d'étanchéité selon l'une des revendications 1 ou 2, **caractérisé en ce que** le dispositif d'étanchéité (40) est disposé de manière pivotante sur le mélangeur (1), sur le récipient de mélange (8) ou sur un bâti (14).

4. Dispositif d'étanchéité selon l'une des revendications 1 à 3, **caractérisé en ce que** le joint d'étanchéité autoportant (6, 42, 61, 62) est constitué d'une bague d'étanchéité élastique (61, 61', 61") et d'une bague de renfort (62), qui sont réalisées d'une seule pièce.

5. Dispositif d'étanchéité selon l'une des revendications 1 à 4, **caractérisé en ce que** le dispositif de levage (16) présente au moins une traverse de maintien (43), orientée radialement vers l'intérieur contre le joint d'étanchéité autoportant (6, 42, 61, 62), qui est réalisée de manière à se déplacer verticalement, dans lequel ladite traverse de maintien (43) prend le joint d'étanchéité autoportant (6, 42, 61, 62) par le dessous et le soulève ou l'abaisse par rapport à la tête de mélangeur (2) ou au récipient de mélange (8).

6. Dispositif d'étanchéité (40) comprenant au moins un joint d'étanchéité (6, 42, 61, 62), dans lequel le dispositif d'étanchéité est réalisé pour le positionnement de l'au moins un joint d'étanchéité (6, 42, 61, 62) dans la zone d'étanchéité entre une partie supérieure et une partie inférieure d'une installation technique de procédé, dans lequel le joint d'étanchéité est réalisé en tant que joint d'étanchéité autoportant et autonome (6, 42, 61, 62), dans lequel le dispositif d'étanchéité (40) présente des tiges de guidage (17) mobiles verticalement, aux extrémités desquelles respectivement est disposé au moins un logement (48) pour la fixation par complémentarité de forme et/ou à force du joint d'étanchéité (6, 42, 61, 62).

7. Dispositif d'étanchéité (40) selon la revendication 6, **caractérisé en ce que** le logement (48) présente une butée supérieure (47) et une traverse de maintien inférieure (43), entre lesquelles le joint d'étanchéité (6, 42, 61, 62) est maintenu.

8. Dispositif d'étanchéité (40) selon la revendication 6 ou 7, **caractérisé en ce que** le dispositif d'étanchéité (40) présente au moins un dispositif de rotation (50) pour le logement (48), dans lequel le dispositif de rotation (50) fait tourner le logement (48) vers le joint d'étanchéité (6, 42, 61, 62) ou à l'écart du joint d'étanchéité (6, 42, 61, 62).

9. Dispositif d'étanchéité (40) selon la revendication 8, **caractérisé en ce que** le dispositif de rotation (50) présente au moins un entraînement (52) qui est relié à la tige de guidage (17) au moins, dans lequel l'entraînement (52) provoque un mouvement de rotation (54) d'au moins une traverse de maintien (43) du logement (48) autour de l'axe longitudinal de la tige de guidage (17).

10. Dispositif d'étanchéité (40) selon l'une des revendications 6 à 9, **caractérisé en ce que** l'installation technique de procédé est réalisée en tant que mélangeur (1), dans lequel la partie supérieure est une tête de mélangeur (2) et la partie inférieure un récipient de mélange (8), et que le dispositif d'étanchéité (40) est situé sur la tête de mélangeur (2).

11. Dispositif d' étanchéité (40) selon la revendication 10, **caractérisé en ce que** l'au moins un logement (48) maintient le joint d'étanchéité (6, 42, 61, 62) entre la tête de mélangeur (2) et le récipient de mélange (8), dans lequel le logement (48) peut être déplacé dans la direction verticale et peut tourner dans la direction horizontale.

12. Mélangeur (1) pour des matières en poudre, en semoule et/ou en granulés, constitué d'une tête de mélangeur (2) et d'au moins un récipient de mélange (8) pouvant être couplé, dans lequel au moins un joint d'étanchéité (6, 42, 61, 62) est disposé entre la tête de mélangeur (2) et le récipient de mélange (8), dans lequel le joint d'étanchéité (6, 42, 61, 62) est réalisé en tant que joint d'étanchéité autoportant (6, 42, 61, 62), dans lequel le mélangeur (1) présente un dispositif d'étanchéité (40) avec un dispositif de levage (16) qui positionne le joint d'étanchéité autoportant (6, 42, 61, 62) entre la tête de mélangeur (2) et le récipient de mélange (8).

13. Mélangeur (1) selon la revendication 2, **caractérisé en ce que** le mélangeur (1) présente un dispositif d'étanchéité (40) selon l'une des revendications 1 à 12.

14. Procédé de mélange de matières en poudre, en semoule et/ou en granulés, dans lequel au moins un joint d'étanchéité est disposé dans la zone d'étanchéité entre une tête de mélangeur (2) d'un mélangeur (1) et un récipient de mélange mobile (8) pouvant être couplé, comprenant les étapes de procédé suivantes :
14.1 positionner un joint d'étanchéité autoportant et autonome (6, 42, 61, 62) sur un récipient de mélange (8) à la main par un opérateur ;
14.2 positionner le récipient de mélange mobile (8) sous le mélangeur (1) ;
14.3 accoster le récipient de mélange (8) à la tête de mélangeur (2) du mélangeur (1), dans lequel un dispositif d'étanchéité (40), qui est réalisé en tant qu'unité indépendante par rapport à la tête de mélangeur (2) et au récipient de mélange (8), est entraîné dans la direction verticale ;
14.4 mélanger les matières en poudre, en semoule et/ou en granulés ;
14.5 désaccoupler le récipient de mélange (8) de la tête de mélangeur (2) ;
14.6 maintenir le joint d'étanchéité autoportant (6, 42, 61, 62) avec le dispositif d'étanchéité (40) dans une position prédéterminée sous la tête de mélangeur (2) du mélangeur (1).

15. Procédé de mélange de matières en poudre, en semoule et/ou en granulés, dans lequel au moins un joint d'étanchéité est disposé dans la zone d'étanchéité entre une tête de mélangeur (2) d'un mélangeur (1) et un récipient de mélange mobile (8) pouvant être couplé, comprenant les étapes de procédé suivantes :
15.1 positionner un joint d'étanchéité autoportant et autonome (6, 42, 61, 62) sur un récipient de mélange (8) avec un dispositif d'étanchéité (40) ;
15.2 positionner le récipient de mélange mobile (8) sous le mélangeur (1) ;
15.3 accoster le récipient de mélange (8) à la tête de mélangeur (2) du mélangeur (1), dans lequel le dispositif d'étanchéité (40), qui est réalisé en tant qu'unité indépendante par rapport à la tête de mélangeur (2) et au récipient de mélange (8), est entraîné dans la direction verticale ;
15.4 mélanger les matières en poudre, en semoule et/ou en granulés ;
15.5 désaccoupler le récipient de mélange (8) de la tête de mélangeur (2) ;
15.6 maintenir le joint d'étanchéité autoportant (6, 42, 61, 62) avec le dispositif d'étanchéité (40) dans une position prédéterminée sous la tête de mélangeur (2) du mélangeur (1).
